# EUROPEAN PATENT APPLICATION

(11) **EP 4 742 003 A1**
(43) Date of publication of application: **13.05.2026**
(21) Application number: 24849688.7
(22) Date of filing: 31.07.2024
(51) Int. Cl.: G06F 3/01, G06F 3/04842, G02B 27/01, G06F 1/16, G01C 21/36

(54) **ELECTRONIC DEVICE FOR PROVIDING ROUTE GUIDANCE SERVICE AND OPERATION METHOD THEREOF**

(30) Priority: 03.08.2023 KR 20230101637; 11.12.2023 KR 20230178617; 11.12.2023 KR 20230178624
(71) Applicant: Samsung Electronics Co., Ltd., Suwon-si, Gyeonggi-do 16677 (KR)
(72) Inventor: LEE, Jaeyong, Suwon-si Gyeonggi-do 16677 (KR); GO, Eunjeong, Suwon-si Gyeonggi-do 16677 (KR); NAOUR, Jeanchristophe, Suwon-si Gyeonggi-do 16677 (KR); LEE, Injung, Suwon-si Gyeonggi-do 16677 (KR); LEE, Jeongpyo, Suwon-si Gyeonggi-do 16677 (KR); JEONG, Dongyeong, Suwon-si Gyeonggi-do 16677 (KR); CHUN, Jaemin, Suwon-si Gyeonggi-do 16677 (KR); SEO, Hyunggoog, Suwon-si Gyeonggi-do 16677 (KR)
(74) Representative: Appleyard Lees IP LLP
(86) International application number: PCT/KR2024/095946
(87) International publication number: WO 2025/029121

(57) **Abstract**

According to an embodiment, an electronic device may include at least one sensor. The electronic device may include a GPS module. The electronic device may include a display module. The electronic device may include a processor operatively connected to the at least one sensor, the GPS module, and the display module. The processor may be configured to identify the current location of the electronic device on the basis of at least one piece of first data provided from the GPS module. The processor may be configured to identify an intermediate destination for route guidance corresponding to destination information on the basis of the destination information and the current location of the electronic device. The processor may be configured to identify a direction in which the electronic device faces, on the basis of at least one piece of second data from the at least one sensor. The processor may be configured to control the display module to express an object corresponding to a range including a difference between a reference direction for route guidance from the current location of the electronic device to the intermediate destination and the direction in which the electronic device faces.

## Description

### [Technical Field]

The disclosure relates to an electronic device for providing a route guidance service and an operation method thereof.

### [Background Art]

A route guidance service (or navigation service) may calculate and provide an optimal route from the current location of an electronic device (or a vehicle) to a desired destination. For example, an electronic device may identify the current location of the electronic device by using a global positioning system (GPS). The electronic device may identify at least one intermediate destination (waypoint) from the current location to the destination, and may provide route guidance based on the at least one intermediate destination. The electronic device may provide, as examples of route guidance, the distance from the current location to the next intermediate destination, the direction of travel to the next intermediate destination, and/or the direction of travel from the next intermediate destination, but the example of route guidance is not limited thereto.

The route guidance service may be provided not only while driving, but also while walking. A user may use a route guidance service by using, for example, an electronic device such as a smartphone (or a tablet PC). A user may move to a destination while identifying content related to route guidance displayed on a display module of an electronic device, while carrying the electronic device.

The above-described information may be provided as related art for the purpose of helping in the understanding of the disclosure. None of the above may be claimed as prior art related to the disclosure or used to determine prior art.

### [Detailed Description of the Invention]

### [Technical Problem]

### [Technical Solution]

According to an embodiment, the electronic device may include at least one sensor. The electronic device may include a GPS module. The electronic device may include a display module. The electronic device may include a processor operatively connected to the at least one sensor, the GPS module, and the display module. The processor may be configured to identify a current location of the electronic device, based on at least one first data provided from the GPS module. The processor may be configured to identify an intermediate destination for route guidance corresponding to destination information, based on the destination information and the current location of the electronic device. The processor may be configured to identify a direction in which the electronic devices faces, based on at least one second data from the at least one sensor. The processor may be configured to control the display module to represent an object corresponding to a range in which a difference between a reference direction for route guidance from the current location of the electronic device to the intermediate destination and the direction in which the electronic device faces is included.

According to an embodiment, an operation method of an electronic device including at least one sensor, a GPS module, and a display module may be provided. The operation method may include identifying a current location of the electronic device, based on at least one first data provided from the GPS module. The operation method may include identifying an intermediate destination for route guidance corresponding to destination information, based on the destination information and the current location of the electronic device. The operation method may include identifying a direction in which the electronic device faces, based on at least one second data from the at least one sensor. The operation method may include controlling the display module to represent an object corresponding to a range in which a difference between a reference direction for route guidance from the current location of the electronic device to the intermediate destination and the direction in which the electronic device faces is included.

According to an embodiment, a computer-readable storage medium storing at least one instruction may be provided. According to an embodiment, the at least one instruction may, when executed by the processor of the electronic device, cause the electronic device to perform at least one operation. The operation method may include identifying a current location of the electronic device, based on at least one first data provided from the GPS module of the electronic device. The operation method may include identifying an intermediate destination for route guidance corresponding to destination information, based on the destination information and the current location of the electronic device. The operation method may include identifying a direction in which the electronic device faces, based on at least one second data from at least one sensor of the electronic device. The operation method may include controlling the display module of the electronic device to represent an object corresponding to a range in which a difference between a reference direction for route guidance from the current location of the electronic device to the intermediate destination and the direction in which the electronic device faces is included.

According to an embodiment, a computer-readable storage medium storing at least one instruction may be provided. The at least one instruction may, when executed by the processor of the electronic device, cause the electronic device to perform at least one operation. The at least one operation may include representing content associated with movement of at least a part of a user's body according to a specified rule. The at least one operation may include obtaining information associated with a location of at least a part of the user's body while the content is represented. The at least one operation may include identifying depth information for representing an object corresponding to the user, based on information associated with the location of at least a part of the body. The at least one operation may include detecting an event that causes representation of a first object. The at least one operation may include representing the first object, based on the depth information corresponding to the user, in response to detecting the event.

According to an embodiment, an electronic device may include memory configured to store at least one instruction. The electronic device may include at least one sensor. The electronic device may include a display module. The electronic device may include a processor operatively connected to the memory, the at least one sensor, and the display module. The at least one instruction may, when executed by the processor, cause the electronic device to perform at least one operation. The at least one operation may include representing content associated with movement of at least a part of a user's body according to a specified rule. The at least one operation may include obtaining information associated with a location of at least a part of the user's body while the content is represented. The at least one operation may include identifying depth information for representing an object corresponding to the user, based on information associated with the location of at least a part of the body. The at least one operation may include detecting an event that causes representation of a first object. The at least one operation may include representing the first object, based on the depth information corresponding to the user, in response to detecting the event.

According to an embodiment, an operation method of an electronic device may be provided. The operation method of the electronic device may include representing content associated with movement of at least a part of a user's body according to a specified rule. The operation method of the electronic device may include obtaining information associated with a location of at least a part of the user's body while the content is represented. The operation method of the electronic device may include identifying depth information for representing an object corresponding to the user, based on information associated with the location of at least a part of the body. The operation method of the electronic device may include detecting an event that causes representation of a first object. The operation method of the electronic device may include representing the first object, based on the depth information corresponding to the user, in response to detecting the event.

### [Brief Description of Drawings]

FIG. 1 is a block diagram of an electronic device according to embodiments.
FIG. 2A is a diagram illustrating terrain for route guidance according to an embodiment.
FIG. 2B is a diagram illustrating a difference between a reference direction and a direction an electronic device is facing according to an embodiment.
FIGS. 3A to 3D are diagrams illustrating an object expressed according to embodiments.
FIG. 4A illustrates a flowchart illustrating an operation method of an electronic device according to an embodiment.
FIG. 4B illustrates a flowchart illustrating an operation method of an electronic device according to an embodiment.
FIG. 4C illustrates a flowchart illustrating an operation method of an electronic device according to an embodiment.
FIG. 4D illustrates a flowchart illustrating an operation method of an electronic device according to an embodiment.
FIG. 5 illustrates a flowchart illustrating an operation method of an electronic device according to an embodiment.
FIG. 6 is a diagram illustrating a plurality of ranges according to an embodiment.
FIG. 7A illustrates a flowchart illustrating an operation method of an electronic device according to an embodiment.
FIG. 7B illustrates a flowchart illustrating an operation method of an electronic device according to an embodiment.
FIG. 8 is a diagram illustrating implementation of an object according to an embodiment.
FIG. 9A is a diagram illustrating an example of an object according to an embodiment.
FIG. 9B is a diagram illustrating an example of an object according to an embodiment.
FIG. 9C is a diagram illustrating an example of an object according to an embodiment.
FIG. 10 is a perspective view illustrating an internal configuration of a wearable electronic device according to an embodiment of the disclosure.
FIGS. 11A and 11B are diagrams illustrating a front and a rear of a wearable electronic device 1100 according to an embodiment.
FIG. 12A is a diagram illustrating expression of an object for a virtual service according to an embodiment.
FIG. 12B is a diagram illustrating depth information of an object according to an embodiment.
FIG. 12C is a diagram illustrating whether an object is to be selected based on the length of a user's arm, according to a comparative example for comparison with an embodiment.
FIG. 13 is a flowchart illustrating an operation method of an electronic device according to an embodiment.
FIG. 14A is a diagram illustrating content according to an embodiment.
FIG. 14B is a diagram illustrating information related to a location identified during provision of content according to an embodiment.
FIG. 14C is a diagram illustrating an expression of content according to an embodiment.
FIG. 15 is a diagram illustrating an example of content according to an embodiment.
FIG. 16 is a flowchart illustrating an operation method of an electronic device according to an embodiment.
FIG. 17A is a diagram illustrating content according to an embodiment.
FIG. 17B is a diagram illustrating depth information according to an embodiment.
FIG. 18A is a flowchart illustrating an operation method of an electronic device according to an embodiment.
FIG. 18B is a diagram illustrating an expression of an object according to an embodiment.
FIG. 19 is a flowchart illustrating an operation method of an electronic device according to an embodiment.
FIG. 20 is a diagram illustrating performance of related functions by multiple areas according to an embodiment.
FIG. 21 is a flowchart illustrating an operation method of an electronic device according to an embodiment.

### [Mode for Carrying out the Invention]

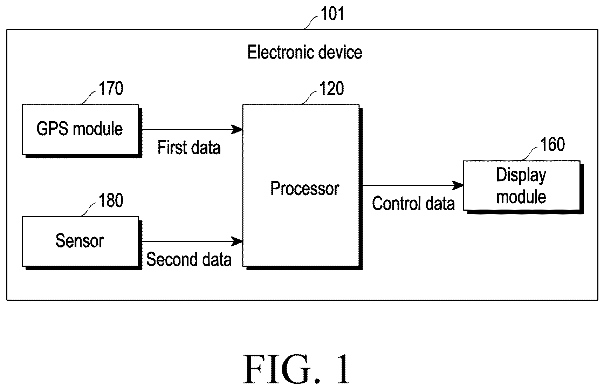

FIG. 1 is a block diagram of an electronic device according to embodiments.

According to an embodiment, the electronic device 101 may include a processor 120, a display module 160, a GPS module 170, and/or a sensor 180. In some embodiments, at least one of these components may be omitted from the electronic device 101, or one or more other components may be added. In some embodiments, some of these components may be integrated into one component, and there is no limit to their implementation.

The processor 120 may, for example, execute software (e.g., a program) to control at least one other component of the electronic device 101 and perform various data processing or operations. As at least a part of data processing or operation, the processor 120 may store a command or data received from another component in memory (not shown), process the command or data stored in memory (not shown), and store result data in memory (not shown). The processor 120 may include a main processor (e.g., a central processing unit) or an auxiliary processor (e.g., a graphics processing unit, a neural network processing unit, an image signal processor, a sensor hub processor, or a communication processor) which is operable independently or together with the main processor.

The display module 160 may visually provide information to the outside (e.g., a user) of the electronic device 101. For example, when the electronic device 101 is implemented as a smartphone, a tablet PC, a video see through (VST) device, or a head-mounted device (HMD), the display module 160 may be implemented to include, for example, a liquid crystal display (LCD) and a control means (e.g., a display driving integrated circuit (DDI)). The display module 160 may further include a touch screen panel (TSP) and/or a control means (e.g., a TSP integrated circuit (TSP IC)) for touch sensing. For example, when the electronic device 101 is implemented as an augmented reality (AR) glasses-type device, the display module 160 may be implemented to include, for example, a light-emitting device, an optical waveguide, and/or a control means. The processor 120 may control the display module 160 to express an object. The expression of an object will be described later. For example, the processor 120 may provide control data for causing an object to be expressed to the display module 160, and this may also be expressed as the processor 120 controlling the display module 160.

The GPS module 170 may receive at least one satellite signal from each of at least one satellite. The GPS module 170 may process at least one satellite signal received thereby and provide the processor 120 with first data related to a result of processing. The processor 120 may identify (or detect, recognize, determine, or calculate) the current location of the electronic device 101 based on the first data. In an example, the GPS module 170 may process at least one satellite signal received from each of at least one satellite to calculate a current location, and in this case, may provide the current location as first data to the processor 120. In an example, the GPS module 170 may provide, as first data, a result of processing at least one satellite signal to the processor 120, and in this case, the processor 120 may calculate a current location by using the first data. The current location may refer to a location where the electronic device 101 (or the GPS module 170) is placed, which is identified based on processing of data identified by the GPS module 170, and may be expressed as, for example, GPS coordinates and/or latitude/longitude coordinates, but there is no limit to the expression format. As described above, the current location may be identified by the GPS module 170 and provided to the processor 120, or may be identified by the processor 120. The processor 120 may additionally (or alternatively) use data from another entity other than the GPS module 170 to identify the current location of the electronic device 101. For example, the current location may be determined not only using GPS, but also additionally (or alternatively) using Wi-Fi positioning system (WPS) and/or simultaneous localization and mapping (SLAM), and there is no limit to the method used to determine current location.

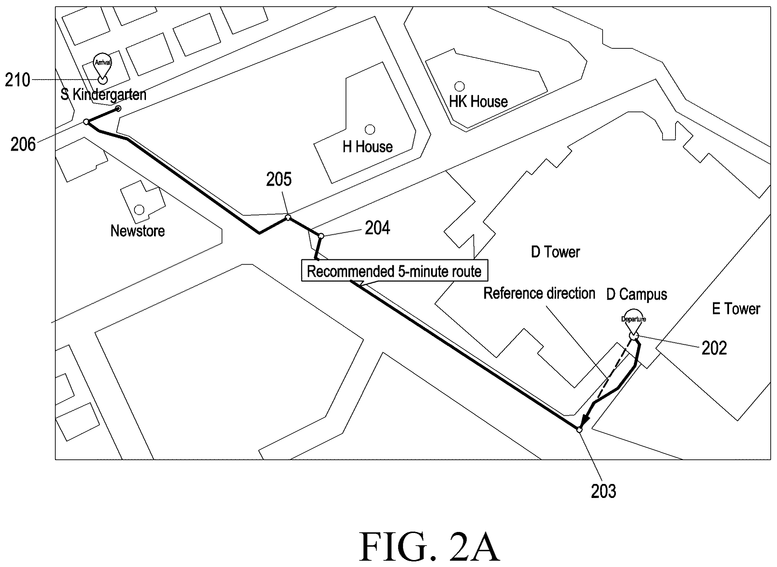

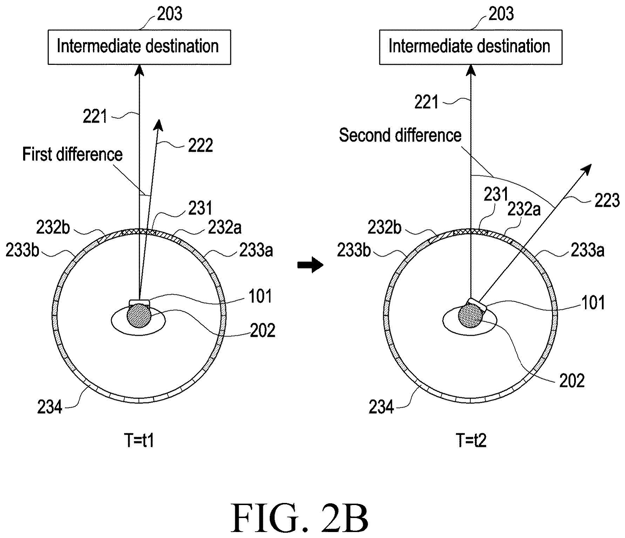

The sensor 180 may include at least one sub-sensor, for example, a gyroscope, a magnetometer, and/or an accelerometer, but there is no limit to the type of device (or module) included in the sensor 180. The sensor 180 may be implemented, for example, as a motion processing unit (MPU) and/or an inertial measurement unit (IMU), but there is no limit to the implementation example thereof. The sensor 180 may process sensing data of each of at least one sub-sensor to provide second data. In an example, the sensor 180 may process sensing data of each of at least one sub-sensor to calculate a direction in which the electronic device 101 is facing, and in this case, the sensor 180 may provide the direction in which the electronic device 101 is facing to the processor 120 as second data. In an example, the sensor 180 may provide the processing result of the sensing data of each of at least one sub-sensor as second data to the processor 120, and in this case, the processor 120 may calculate the direction in which the electronic device 101 is facing by using the second data. The direction in which the electronic device 101 is facing may be, for example, at least one degree of rotation relative to at least one reference point (or reference angle) along at least one axis (for example, in a three-dimensional case, there may be three axes, but the number of dimensions is not limited) passing through the electronic device (101), but is not limited thereto. For example, the direction in which the electronic device 101 is facing may also be referred to as a posture (orientation) of the electronic device 101, a degree of inclination based on at least one reference of the electronic device 101, or the like. The direction in which the electronic device 101 is facing may be expressed, for example, in a 3-axis angle (e.g., roll/pitch/yaw) format, Euler angle format, and/or a quaternion format, but there is no limit to the expression format. As described above, the direction in which the electronic device 101 is facing may be identified by the sensor 180 and provided to the processor 120, or the processor 120 may calculate the same based on data received from the sensor 180, and there is no limit to the entity responsible for identifying the same. In an example, 3-axis angles (e.g., roll/pitch/yaw) may be identified based on sensing data from a gyroscope sensor (e.g., based on integration results). At least some of the 3-axis angles (e.g., yaw, but not limited there to) may be corrected based on sensing data of the magnetometer. At least some of the 3-axis angles (e.g., roll/pitch, but not limited there to) may be corrected based on sensing data of the accelerometer. In the correction process (which may also be referred to as a data combination process), for example, a Kalman filter may be used, but there is no limit thereto. The 3-axis angles may be converted, for example, into Euler angle format and/or a quaternion format, but there is no limit to the expression format. Hereinafter, an object expression by the electronic device 101 will be described with reference to FIGS. 2A and 2B.

FIG. 2A is a diagram illustrating terrain for route guidance according to an embodiment. FIG. 2B is a diagram illustrating a difference between a reference direction and a direction an electronic device is facing according to an embodiment.

According to an embodiment, the processor 120 may identify the current location of the electronic device 101, based on at least one piece of first data from the GPS module 170. As described above, the current location of the electronic device 101 may be calculated by the processor 120 or may be calculated by the GPS module 170.

The processor 120 may identify an intermediate destination for route guidance corresponding to destination information (e.g., location information of the destination) based on the destination information and the current location of the electronic device 101. For example, as illustrated in FIG. 2A, the processor 120 may identify a current location 202. The processor 120 may obtain destination information on a destination 210. For example, the processor 120 may execute an application (or a navigation application) for route guidance. The processor 120 may identify destination information based on a user input (e.g., text and/or voice) received through a user interface of an application. The processor 120 may identify information for route guidance, based on information on the current location 202 of the electronic device 101 and information on the destination 210. The information for route guidance may include, for example, at least one intermediate destinations 203, 204, 205, and 206 between the current location 202 and the destination 210, a distance from one point to the next point, a direction from one point to the next point, and a traveling direction at the next intermediate destination, but there is no limit to the type. At least one of the intermediate destinations 203, 204, 205, and 206 may be configured as a point at which a change in the traveling direction (e.g., right or left turn, but not limited thereto) is required, a point at which selection of one of a plurality of candidate routes is required, and/or a point at which guidance for the traveling direction is required among the routes from the current location 202 to the destination 210, but there is no limit to the configuration criteria. Route guidance at the current location may include, for example, information such as the distance from the current location to the next intermediate destination, the direction to be traveled from the current location to the next intermediate destination, and/or the direction to be traveled at the next intermediate destination, but there is no limit to the type of such information. Meanwhile, the intermediate destination may also be named as a destination, a next destination, a node, a passing point, or the like, and there is no limit to the expression method. Meanwhile, a route may be configured without an intermediate destination from the current location to the destination, and in this case, the intermediate destination may be replaced by the destination. For example, when a route from the current location to the destination is identified as one straight line, those skilled in the art will appreciate that no intermediate destination may be configured.

The processor 120 may identify a reference direction for route guidance from the current location 202 to the next intermediate destination 203. The reference direction may be a direction corresponding to (or related to, for) route guidance from the current location 202 to the next intermediate destination 203. For example, the reference direction may be configured as a direction from the current location 202 to the next intermediate destination 203, but there is no limit to the configuration method. For example, a reference direction (which may be a vector having multiple components, but there is no limit) in the coordinate system may be configured according to the difference (e.g., a subtraction) between the coordinate value in the coordinate system of the current location 202 and the coordinate value of the intermediate destination 203, but this is merely illustrative, and there is no limit to the method of identifying the reference direction. For example, the reference direction may be expressed in the same format as the direction in which the electronic device 101 is facing, or conversion of one of the reference direction and the direction in which the electronic device 101 is facing may be performed for comparison. For example, the processor 120 may identify "Go straight 25m from the current location 202 to the intermediate destination 203 and then turn right at the corresponding location" as route guidance. The direction in which the electronic device 101 is facing should be substantially aligned with the reference direction (or should be within a difference considered as a tolerance), so that the user may move in the correct direction while carrying the electronic device 101. If the direction in which the electronic device 101 is facing is opposite to the reference direction, when the user moves forward according to the route guidance provided by the electronic device 101, the user may move to the opposite location rather than the intermediate destination 203. Accordingly, it may be required to provide information related to the alignment of the reference direction for the direction in which the electronic device 101 is facing and route guidance.

For example, referring to FIG. 2B, the processor 120 may identify a reference direction 221 for route guidance from the current location 202 corresponding to a first timepoint t1 to the next intermediate destination 203. The reference direction 221 may be configured as a direction from the current location 202 to the intermediate destination 203 as described above, but there is no limit to the configuration method. The processor 120 may identify a direction in which the electronic device 101 is facing (or the posture of the electronic device 101) based on at least one piece of second data corresponding to the first time point t1 from the sensor 180. For example, at the first time point t1, the user may gaze in a first direction 222 while wearing the electronic device 101 on the head, and the direction in which the electronic device 101 is facing may be identified as the first direction 222.

The processor 120 may identify a first difference between the reference direction 221 corresponding to the first time point t1 and the first direction 222 in which the electronic device 101 is facing. The first difference may include the magnitude of the angle between the two directions 221 and 222 and/or the direction of the first direction 222 in which the electronic device 101 is facing based on the reference direction 221, but there is no limit thereto. For example, when the reference direction 221 is expressed in the same format as the first direction 222 in which the electronic device 101 is facing, the electronic device 101 may identify a difference between the two directions 221 and 222. If the reference direction 221 and the first direction 222 in which the electronic device 101 is facing are expressed in different formats, the processor 120 may identify a difference between the two directions 221 and 222 after converting one of the directions to the format of the other direction for format unification, but there is no limit thereto.

The processor 120 may identify a range including the first difference. For example, as illustrated in FIG. 2B, the processor 120 may identify a first range 231 including the first difference among a plurality of ranges 231, 232a, 232b, 233a, 233b, and 234. The plurality of ranges 231, 232a, 232b, 233a, 233b, and 234 are shown, for example, as angular coordinate systems, but this is illustrative, and there is no limit to the configuration criteria and/or dimensions. In the example of an angular coordinate system, the angle (or vector) corresponding to the reference direction 221 may be used as a reference of the angular coordinate system. For example, the angle corresponding to the reference direction 221 may be 0°, and in this case, the range may be configured as illustrated in Table 1.

**[Table 1]**

| range | angle |
|---|---|
| range 1 (231) | greater than or equal to -θ₁ and less than +θ₁ |
| range 2-1 (232a) | greater than or equal to +θ₁ and less than +θ₂ |
| range 2-2 (232b) | greater than or equal to -θ₂ and less than -θ₁ |
| range 3-1 (233a) | greater than or equal to +θ₂ and less than +θ₃ |
| range 3-2 (233b) | greater than or equal to -θ₃ and less than -θ₂ |
| range 4 (232a) | greater than or equal to +θ₃ and less than -θ₃ |

As shown in Table 1, for example, the 2-1 range 232a and the 2-2 range 232b being configured symmetrically is merely illustrative and not limiting, and there is no limit to the number of ranges. In Table 1, the description is expressed based on the two-dimensional angular coordinate system, but there is no limit to the dimension. Meanwhile, when the range is expressed in two-dimensions, those skilled in the art will appreciate that conversion of non-two-dimensional physical quantities (e.g., the direction in which the electronic device 101 is facing, which is expressed in three dimensions) into two-dimensional quantities may also be performed (e.g., it may be projection, but there is no limit thereto).

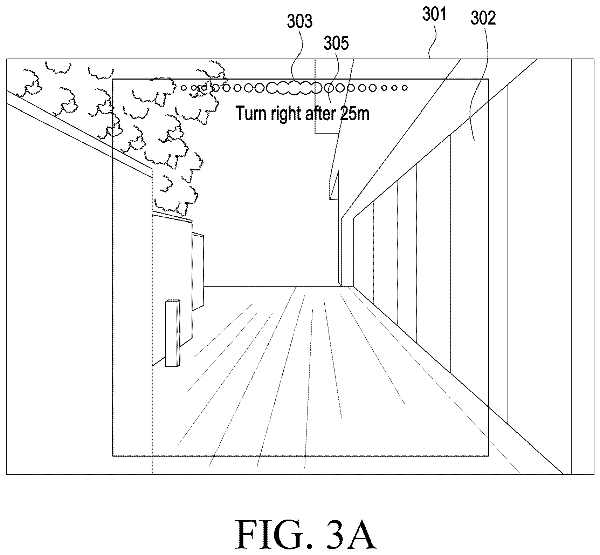

The processor 120 may control the display module 160 to express (e.g., display, provide, present, reproduce, render, emit light, and/or control an optical path, but there is no limit thereto) an object (e.g., a UI element, UI object, icon, text, button, image, visual element, visual component, avatar, thumbnail, pop-up, animation, key, and/or button, but there is no limit thereto) corresponding to the first range 231 that includes the first difference. An object corresponding to the first range 231 may refer to, for example, that a direction in which the electronic device 101 is facing may be substantially aligned (or matched, corresponding, and/or aligned) with the reference direction 231, but there is no limit thereto. The expression of an object will be described with reference to FIGS. 3A to 3D.

Meanwhile, at the second time point t2, the user may remain at the current location 202 and only turn their head in a different direction. The processor 120 may, based on data provided from the sensor 180 and corresponding to the second time point t2, identify that the direction in which the electronic device 101 is facing is the second direction 223. The processor 120 may identify a second difference between the reference direction 221 and the second direction 223 that is the direction in which the electronic device 101 is facing. The processor 120 may identify that the second difference is included in the 3-1 range 233a. The processor 120 may control the display module 160 to express an object corresponding to the third-1 range 233a including the first difference. The object corresponding to the 3-1 range 233a may indicate, for example, that the direction in which the electronic device 101 is facing does not substantially correspond (or match, correspond, and/or align) with the reference direction 231, but there is no limit thereto. For the expression of an object, description thereof will be made with reference to FIGS. 3A to 3D. As described above, a user may perceive the degree of alignment between the looking direction and the reference direction for route guidance, and thus may move along the correct route. If the direction in which the electronic device 101 is facing is the second direction 233, when the route guidance of "Go straight 25m and then turn right" configured based on the current location 202 is provided, the user may go straight in the second direction 233. The electronic device 101 may express not only the route guidance of "Go straight 25m and then turn right" but also an object indicating a degree of alignment between the direction in which the electronic device 101 is facing and the reference direction. Accordingly, the user may turn their head so that the direction in which the electronic device 101 is facing (i.e., a direction in which the user is gazing) and the reference direction are aligned, and then may move through a correct route.

When the difference is included in the 2-1 range 232a or the 2-2 range 232b, the processor 120 may be configured to maintain display of an object corresponding to the first range 231. For example, the 2-1 range 232a or the 2-2 range 232b may be a range for a tolerance. For example, an object may not be changed (or moved) each time the user turns their head to the left or right while moving, or each time the user turns to the left or right while moving. The configuration of the 2-1 range 232a or the 2-2 range 232b as a range for tolerance is merely illustrative, and those skilled in the art will appreciate that the first range 231 may be configured in consideration of tolerance.

FIGS. 3A to 3D are diagrams illustrating an object expressed according to embodiments.

Referring to FIG. 3A, the processor 120 may control the display module 160 such that a first object 303 is expressed as being located in a display area 302. For example, the electronic device 101 may be implemented as an AR glasses-type device. In this case, the user may wear the electronic device 101 and gaze at a first foreground 301. Among these, the display module 160 of the electronic device 101 may be controlled so that the first object 303 is expressed as being located within at least one display area 302 of the display module 160 of the electronic device 101. The first object 303 may be implemented as including, for example, a plurality of circular sub-objects, but this is exemplary and not limited thereto. The first object 303 is illustrated as being displayed, for example, on the relatively upper center of the display area 302, but this is exemplary, and there is no limit to its display location. The processor 120 may control the display module 160 to express an object 305 for route guidance. In the example of FIG. 3A, the object 305 for route guidance is illustrated as text, such as " Turn right after 25m", but this is merely an example, and there is no limit to the implementation of the object. The user, based on the first object 303, may recognize that he or she will go straight for 25m in the current gaze direction and then turn right.

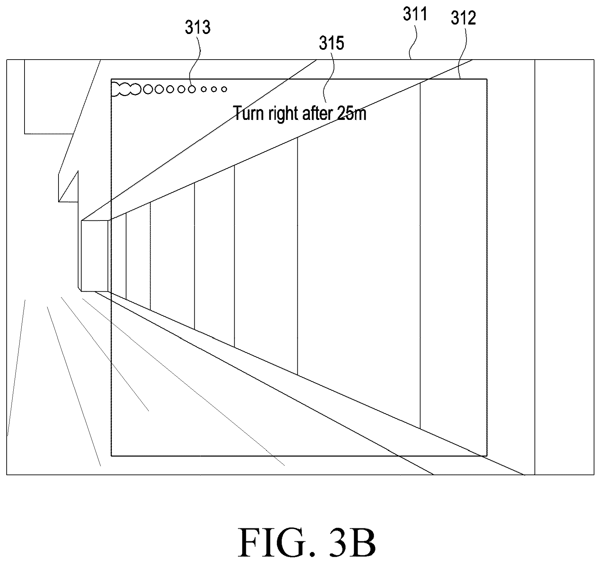

Referring to FIG. 3B, the processor 120 may control the display module 160 such that a second object 313 is expressed as being located in a display area 312. For example, the user may turn their head to the right direction while wearing the electronic device 101 as shown in FIG. 2B. Accordingly, a second foreground 311, which is located relatively to the right of the first foreground 301 in FIG. 3A, may be gazed by the user. As illustrated in FIG. 2B, based on the second difference between the reference direction for route guidance and the direction in which the electronic device 101 is facing being included in the 2-1 range 233a, the processor 120 may control the display module 160 so that the second object 313 corresponding to the 3-1 range 233a is expressed as being located in at least one display area 312. The second object 313 may be implemented to include, for example, a relatively small number of multiple circular sub-objects as compared to the first object 303, but this is merely an example, and there is no limit to the shape thereof. The second object 313 may be implemented to have a shape substantially identical to that of the first object 303, and in this case, the first object 303 and the second object 313 may have different display positions and/or different properties (e.g., color, transparency, but not limited thereto). The second object 313 is illustrated as being displayed, for example, on the relatively upper left side of the display area 312, but this is only an example, and there is no limit to its display location. For example, the display location corresponding to the 3-1 range 233a described in FIG. 2B may be configured to the relatively upper left of the display area 312, and accordingly, the user may intuitively recognize that their head must be turned to the left in order to look at the reference direction. If the difference is included in the 3-2 range 233b, the processor 120 may control the display module 160 to express the object as being placed in the upper right side corresponding to the 3-2 range 233b, but there is no limit. The processor 120 may control the display module 160 to express an object 315 for route guidance. Based on the second object 313, the user may recognize that he or she must turn the head to the left from the current gaze direction and then go straight for 25m. For example, as the user turns their head to the left from the current gaze direction, the processor 120 may identify that the difference is again included in the first range 231. Accordingly, the processor 120 may control the display module 160 to express the first object 303 corresponding to the first range 231. Accordingly, the user may recognize that he or she will move in the current gaze direction by recognizing the first object 303 again.

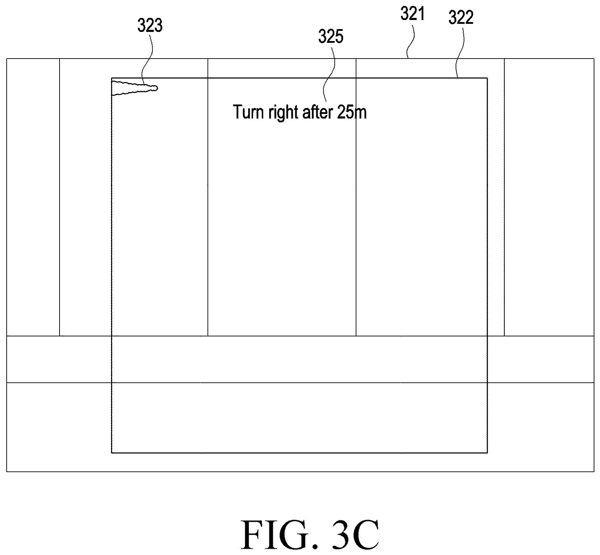

Referring to FIG. 3C, the processor 120 may control the display module 160 so that a third object 323 is expressed as being located in a display area 322. For example, the user may turn their head further to right while wearing the electronic device 101. Accordingly, a third foreground 321, which is located relatively to the right compared to the second foreground 311 of FIG. 3B, may be gazed at by the user. The processor 120 may control the display module 160 such that, based on the third difference between the reference direction for route guidance and the direction in which the electronic device 101 is facing being included in the fourth range 234, the third object 323 corresponding to the fourth range 234 is expressed as being located within at least one display area 322.

The third object 323 may be implemented to include, for example, the same number of multiple circular sub-objects as the second object 313, but the spacing between the multiple sub-objects of the third object 323 may be smaller than the spacing between the multiple sub-objects of the second object 313. Accordingly, the user may recognize that the head needs to be relatively more turned to the left to gaze in the reference direction, based on the shape of the third object 323, but there is no limit to the expression method. The spacing between sub-objects may be configured, for example, based on the magnitude of the difference between the reference direction and the direction in which the electronic device 101 is facing, but there is no limit thereto. The processor 120 may control the display module 160 so as to express an object 325 for route guidance. Based on the third object 323, the user may recognize that he or she must turn the head relatively more to the left from the current gaze direction and then go straight for 25m. For example, as the user turns their head to the left from the current gaze direction, the processor 120 may identify that the difference is again sequentially included in the 3-2 range 233a and the first range 231. Accordingly, the processor 120 may control the display module 160 to sequentially express the second object 313 and the first object 303. Accordingly, the user may recognize that he or she will move in the current gaze direction by recognizing the first object 303 again.

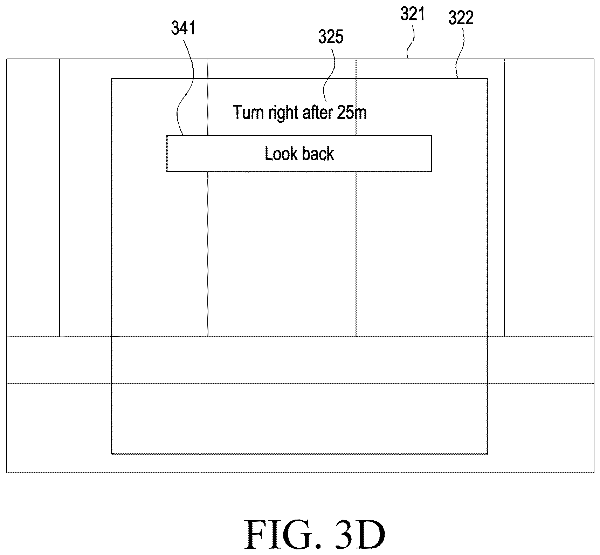

In another example, as illustrated in FIG. 3D, based on the third difference between the reference direction for route guidance and the direction in which the electronic device 101 is facing being included in the fourth range 234, the processor 120 may control the display module 160 to express an object 341 including text of the meaning of "Look back", which corresponds to the fourth range 234.

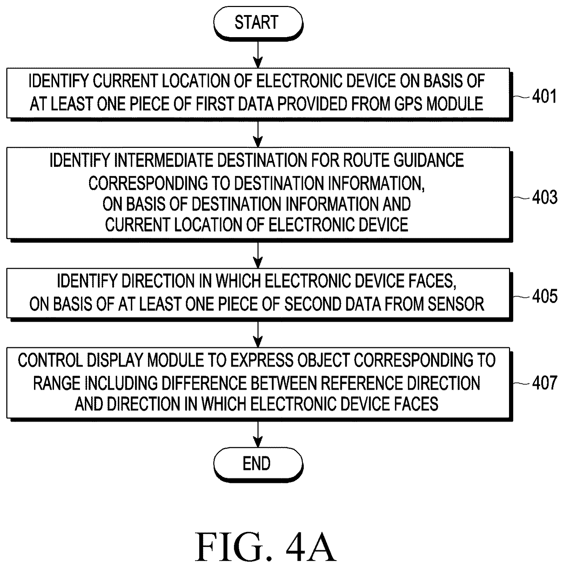

FIG. 4A illustrates a flowchart illustrating an operation method of an electronic device according to an embodiment.

According to an embodiment, in operation 401, the electronic device 101 may identify the current location of the electronic device 101 based on at least one piece of first data provided from the GPS module 170. The identification of the current location based on data from the GPS module 170 is merely exemplary, and those skilled in the art will appreciate that the electronic device 101 may additionally (or alternatively) identify the current location of the electronic device 101 based on a WPS and/or a SLAM method. Meanwhile, in FIG. 1, the identification of current location of the electronic device 101 in operation 401 is shown as being performed before other operations, but this is exemplary, and there is no limit to the timing of identifying the current location.

In operation 403, the electronic device 101 may identify an intermediate destination for route guidance corresponding to destination information, based on the destination information and the current location of the electronic device. For example, the electronic device 101 may identify at least one intermediate destination based on the destination information from the current location, as described with reference to FIG. 2A. The electronic device 101 may, for example, identify an intermediate destination for route guidance after identifying the current location in operation 401 (or, based on identifying the current location, using the identified current location, in response to identifying the current location, when the current location is identified), but is not limited thereto.

In operation 405, the electronic device 101 may identify a direction in which the electronic device 101 is facing based on at least one piece of second data from the sensor 180. In operation 405, although it is described that the electronic device 101 identifies the direction in which the electronic device 101 is facing, there is no limit to the time at which the electronic device 101 identifies the direction in which the electronic device 101 is facing. The direction in which the electronic device 101 is facing at one time point in the embodiment of FIG. 4A may be, for example, performed before or after the identification of the current location. For example, the electronic device 101 may, periodically or based on event detection, identify a direction in which the electronic device 101 is facing, but there is no limit to the event for the identification.

In operation 407, the electronic device 101 may control the display module 160 to express an object corresponding to a range including a difference between the reference direction and the direction in which the electronic device 101 is facing. For example, the electronic device 101 may, after identifying the current location and the intermediate destination (or, based on identifying the current location and the intermediate destination, using the identified current location and the intermediate destination, in response to identifying the current location and the intermediate destination, when identifying the current location and the intermediate destination), identify a reference direction for route guidance from the current location to the intermediate destination. The reference direction may be, for example, a direction from the current location to the intermediate destination, but there is no limit to the configuration method. The electronic device 101 may, after identifying the reference direction and the direction in which the electronic device 101 is facing (or, based on identifying the reference direction and the direction in which the electronic device 101 is facing, using the identified reference direction and the direction in which the electronic device 101 is facing, in response to identifying the reference direction and the direction in which the electronic device 101 is facing, or when identifying the reference direction and the direction in which the electronic device 101 is facing), for example, as described with reference to FIG. 2B, identify a difference between the reference direction and the direction in which the electronic device 101 is facing. If the reference direction and the direction in which the electronic device 101 is facing are expressed in the same format, the electronic device 101 may identify, for example, the magnitude and/or direction of a difference between the two directions, based on a vector difference. If the reference direction and the direction in which the electronic device 101 is facing are expressed in different formats, the electronic device 101 may unify the formats of the two directions, and then identify the magnitude and/or direction of the difference between the two directions, for example, based on a vector difference, but the above-described difference identification method is merely an example, and there is no limit to the identification method. The electronic device 101 may, after identifying the difference between the two directions (or, based on identifying the difference between the two directions, using the identified difference between the two directions, in response to identifying the difference between the two directions, or when the difference between the two directions is identified), identify a range including the difference. The electronic device 101 may, after identifying the range including the difference (or, based on identifying the range including the difference, using the range including the difference, in response to identifying the range including the difference, or when the range including the difference is identified), identify an object corresponding to the range including the difference. The electronic device 101 may control the display module 160 so that the identified object is expressed.

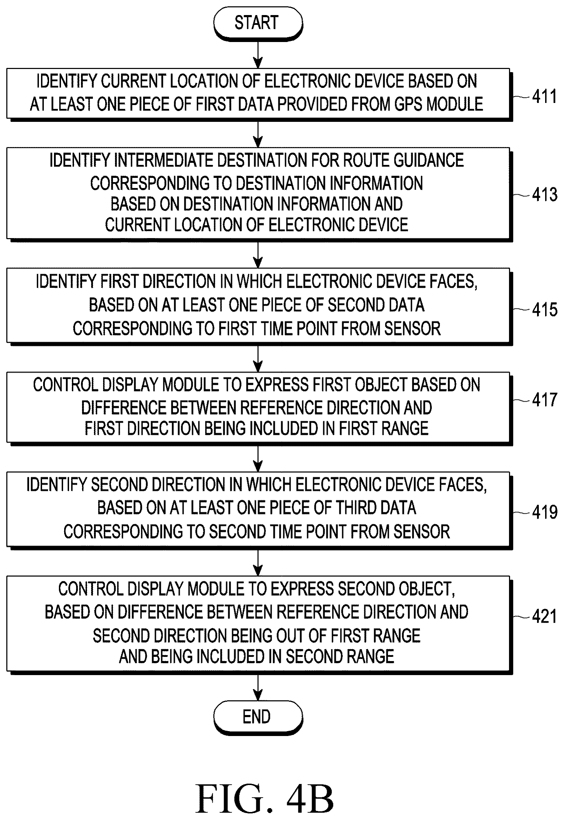

FIG. 4B illustrates a flowchart illustrating an operation method of an electronic device according to an embodiment.

According to an embodiment, in operation 411, the electronic device 101 may identify the current location of the electronic device 101 based on at least one piece of first data provided from the GPS module 170. In operation 413, the electronic device 101 may identify an intermediate destination for route guidance corresponding to destination information, based on the destination information and the current location of the electronic device. In operation 415, the electronic device 101 may identify a first direction in which the electronic device 101 is facing, based on at least one piece of second data corresponding to a first time point from the sensor 180. In operation 417, the electronic device 101 may control the display module 160 to express a first object corresponding to a first range, based on the difference between the reference direction and the first direction being included in the first range.

In operation 419, the electronic device 101 may identify a second direction in which the electronic device 101 is facing, based on at least one piece of third data corresponding to a second time point after the first time point from the sensor 180. In operation 421, the electronic device 101 may control the display module 160 to express a second object corresponding to the second range instead of the first object, based on the difference between the reference direction and the second direction being out of the first range and being included in the second range. For example, the first object corresponding to the first range and the second object corresponding to the second range may have different shapes. For example, the first object corresponding to the first range and the second object corresponding to the second range may have a substantially same shape, but may have different properties (e.g., color, transparency, and/or size, but not limited thereto). For example, the first object corresponding to the first range and the second object corresponding to the second range may have a substantially same shape and/or same property, but the locations where they are expressed may be different. For example, the first object corresponding to the first range and the second object corresponding to the second range may have different shapes and/or different sizes, and the locations where they are expressed may also be different.

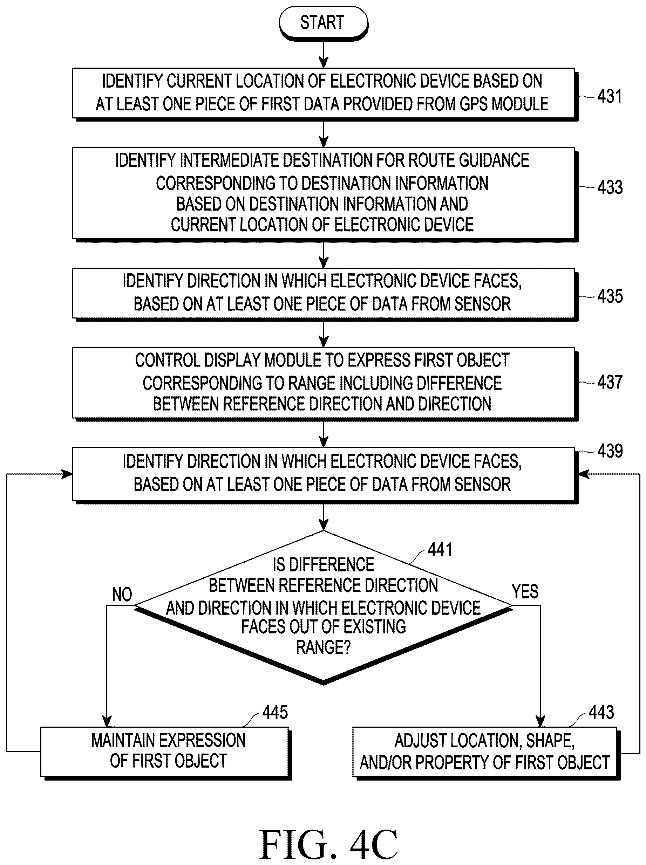

FIG. 4C illustrates a flowchart illustrating an operation method of an electronic device according to an embodiment.

According to an embodiment, in operation 431, the electronic device 101 may identify the current location of the electronic device 101 based on at least one piece of first data provided from the GPS module 170. In operation 433, the electronic device 101 may identify an intermediate destination for route guidance corresponding to destination information, based on the destination information and the current location of the electronic device. In operation 435, the electronic device 101 may identify a direction in which the electronic device 101 is facing based on at least one piece of data from the sensor 180. In operation 437, the electronic device 101 may control the display module 160 to express a first object corresponding to a range including a difference between the reference direction and the direction in which the electronic device 101 is facing.

In operation 439, the electronic device 101 may identify a direction in which the electronic device 101 is facing based on at least one piece of data from the sensor 180. In operation 441, the electronic device 101 may identify whether the difference between the reference direction and the direction (e.g., an updated direction or a new direction) in which the electronic device 101 is facing is out of an existing range. If it is identified that the difference between the reference direction and the direction (e.g., an updated direction or a new direction) in which the electronic device 101 is facing is out of the existing range (operation 441-Yes), the electronic device 101 may perform adjustment of the location, shape, and/or property of the first object. For example, the electronic device 101 may perform adjustment of the location, shape, and/or property of the first object corresponding to a range where the difference between the reference direction and the direction in which the electronic device 101 is facing (e.g., an updated direction or a new direction) is out of the existing range and newly included in the range, but there is no limit. This may also be referred to as the electronic device 101 to express a second object different from the first object corresponding to a range where the difference between the reference direction and the direction in which the electronic device 101 is facing (e.g., an updated direction or a new direction) is out of the existing range and newly included in the range. If it is identified that the difference between the reference direction and the direction (e.g., an updated direction or a new direction) in which the electronic device 101 is facing is not out of the existing range (operation 441-No), the electronic device 101 may maintain the display of the first object in operation 445. Accordingly, even if the user rotates their head within a range tolerable as a tolerance while wearing the electronic device 101, and/or an error of relatively small magnitude occurs in the GPS module 170 and/or the sensor 180, an adjustment of an object (or a change of an object) to be expressed may be prevented from being performed relatively frequently.

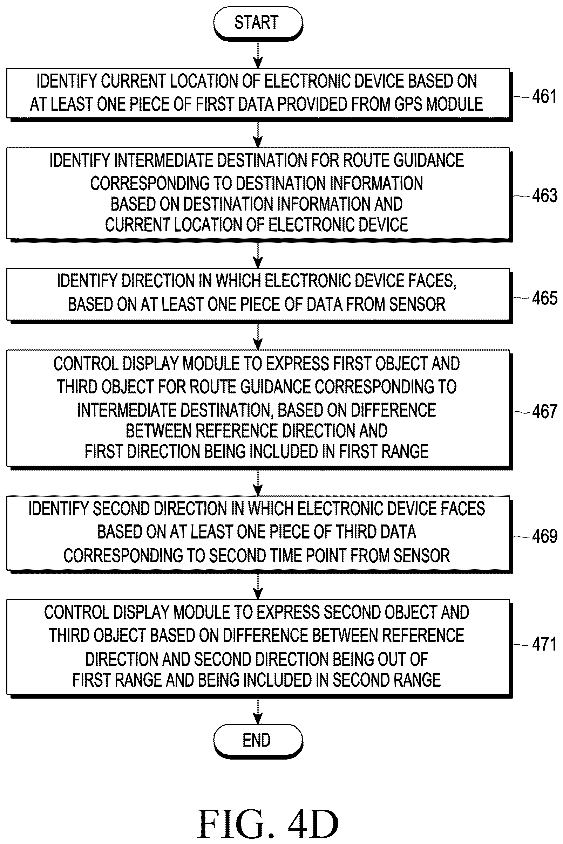

FIG. 4D illustrates a flowchart illustrating an operation method of an electronic device according to an embodiment.

According to an embodiment, in operation 461, the electronic device 101 may identify the current location of the electronic device 101 based on at least one piece of first data provided from the GPS module 170. In operation 463, the electronic device 101 may identify an intermediate destination for route guidance corresponding to destination information, based on the destination information and the current location of the electronic device. In operation 465, the electronic device 101 may identify a first direction in which the electronic device 101 is facing based on at least one piece of second data corresponding to a first time point from the sensor 180. In operation 467, the electronic device 101 may control the display module 160 to express a first object corresponding to a first range and a third object for route guidance, based on the difference between the reference direction and the first direction being included in the first range. For example, the electronic device 101 may express the third object for route guidance, such as text of "Go straight for 50m and then turn right", but this is merely exemplary and there is no limit to the type (or implementation form) of the object for route guidance. The third object may also be expressed in various formats such as a UI element, a UI object, an icon, text, a button, an image, a visual element, a visual component, an avatar, a thumbnail, a pop-up, an animation, a key, and/or a button.

In operation 469, the electronic device 101 may identify a second direction in which the electronic device 101 is facing based on at least one piece of third data corresponding to a second time point after the first time point from the sensor 180. In operation 471, the electronic device 101 may control the display module 160 to express the third object for route guidance together with the second object corresponding to the second range instead of the first object, based on the difference between the reference direction and the second direction being out of the first range and being included in the second range. For example, when the user rotates only their head without moving while wearing the electronic device 101, the third object for route guidance may be substantially maintained as displayed. Meanwhile, as the second object is expressed instead of the first object, the third object may be expressed differently from the existing one (e.g., the shape, properties, and/or location may be changed) such that the second object and the third object are expressed together.

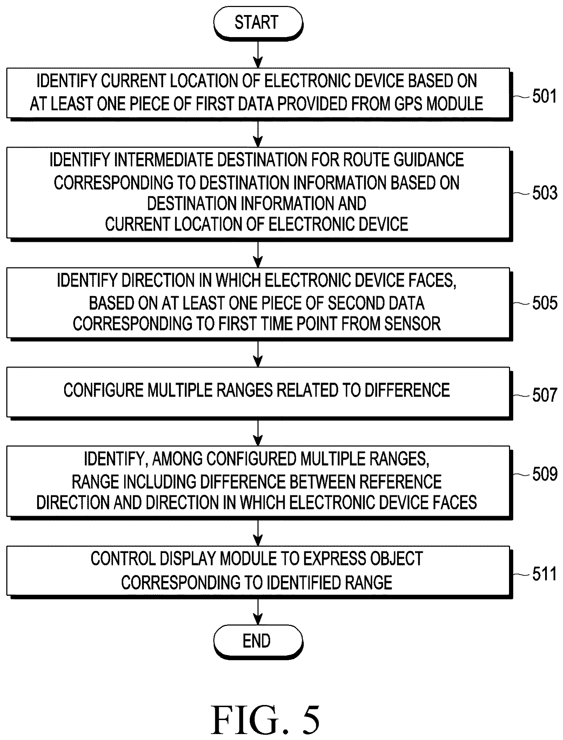

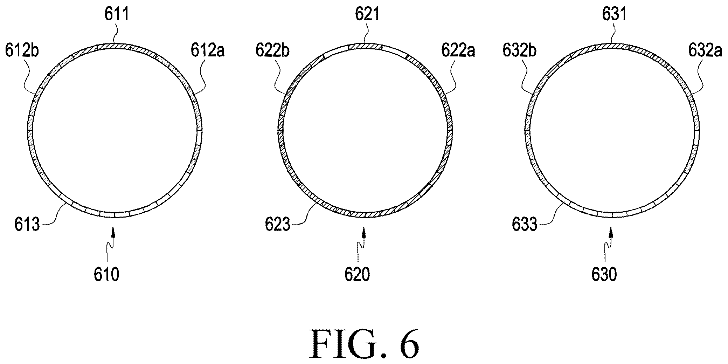

FIG. 5 illustrates a flowchart illustrating an operation method of an electronic device according to an embodiment. An embodiment of FIG. 5 will be described with reference to FIG. 6. FIG. 6 is a diagram illustrating a plurality of ranges according to an embodiment.

According to an embodiment, in operation 501, the electronic device 101 may identify the current location of the electronic device 101 based on at least one piece of first data provided from the GPS module 170. In operation 503, the electronic device 101 may identify an intermediate destination for route guidance corresponding to destination information, based on the destination information and the current location of the electronic device. In operation 505, the electronic device 101 may identify a direction in which the electronic device 101 is facing based on at least one piece of data from the sensor 180.

In operation 507, the electronic device 101 may configure a plurality of ranges related to the difference. Meanwhile, in operation 507 of FIG. 1, there is no limit to the time at which the configuration of a plurality of ranges is performed. For example, the electronic device 101 may periodically perform configuration of a plurality of ranges. For example, the electronic device 101 may perform configuration of a plurality of ranges based on identification of the current location and/or identification of the direction in which the electronic device 101 is facing. For example, the electronic device 101 may perform configuration of a plurality of ranges before the identification of the current location and/or identification of the direction in which the electronic device 101 is facing, but the above-described identification time and/or the event for identification are all exemplary and are not limited. In operation 509, the electronic device 101 may identify, among the plurality of configured ranges, a range including the difference between the reference direction and the direction in which the electronic device 101 is facing. In operation 511, the electronic device 101 may control the display module 160 to express a first object corresponding to the identified range.

Referring to FIG. 6, various examples for configuration of a plurality of ranges may be possible. For example, according to a first configuration 610, a plurality of ranges 611, 612a, 612b, and 613 may be configured. For example, configurations 610, 620, and 630 are illustrated together with the angular coordinate systems in FIG. 6, but this is merely an example, and there is no limit to the configuration criteria and/or dimensions. In the example of an angular coordinate system, an angle (or vector) corresponding to a reference direction may be a reference of the angular coordinate system. For example, the angle corresponding to the reference direction may be 0°, and in this case, the range may be configured as exemplified in Table 2 below.

**[Table 2]**

| range | angle |
|---|---|
| range 1 (611) | greater than or equal to -θ₁₋₁ and less than +θ₁₋₁ |
| range 2-1 (612a) | greater than or equal to +θ₁₋₁ and less than +θ₂ |
| range 2-2 (612b) | greater than or equal to -θ₂ and less than -θ₁₋₁ |
| range 3 (613) | greater than or equal to +θ₂ and less than -θ₂ |

For example, according to a second configuration 620, a plurality of ranges 621, 622a, 622b, and 623 may be configured. According to a third configuration 630, a plurality of ranges 631, 632a, 632b, and 633 may be configured. Table 3 may illustrate the ranges 621, 622a, 622b, and 623 of an exemplary second configuration 620, and Table 4 may illustrate the ranges 631, 632a, 632b, and 633 of an exemplary third configuration 630.

**[Table 3]**

| range | angle |
|---|---|
| range 1 (621) | greater than or equal to -θ₁₋₂ and less than +θ₁₋₂ |
| range 2-1 (622a) | greater than or equal to +θ₁₋₂ and less than +θ₂ |
| range 2-2 (622b) | greater than or equal to -θ₂ and less than -θ₁₋₂ |
| range 3 (623) | greater than or equal to +θ₂ and less than -θ₂ |

**[Table 4]**

| range | angle |
|---|---|
| range 1 (631) | greater than or equal to -θ₁₋₃ and less than +θ₁₋₃ |
| range 2-1 (632a) | greater than or equal to +θ₁₋₃ and less than +θ₂ |
| range 2-2 (632b) | greater than or equal to -θ₂ and less than -θ₁₋₃ |
| range 3 (633) | greater than or equal to +θ₂ and less than -θ₂ |

For example, θ₁₋₂ indicating the boundary of the first range 621 in the second configuration 620 may be configured to be greater than θ₁₋₁ indicating the boundary of the first range 611 in the first configuration 610. For example, θ₁₋₃ indicating the boundary of the first range 631 in the third configuration 630 may be configured to be greater than θ₁₋₂ indicating the boundary of the first range 621 in the second configuration 620. As described above, the first range 621 in the second configuration 620 may be relatively wider than the first range 611 in the first configuration 610, and the first range 631 in the third configuration 630 may be relatively wider than the first range 621 in the second configuration 620.

For example, the electronic device 101 may identify that the difference between the reference direction and the direction to which the electronic device 101 is facing is θ_{N}. It is assumed that θ_{N} is greater than 0 and less than + θ₁₋₁. In all cases where the first configuration 610 is selected, the second configuration 620 is selected, and the third configuration 630 is selected, the electronic device 101 may identify that θ_{N} is included in the first range 611, 621, or 631. The electronic device 101 may control the display module 160 to express an object corresponding to the first range 611, 621, or 631. The object corresponding to the first range 611, 621, or 631 may be, for example, an object indicating that a user is substantially gazing in the reference direction.

It is assumed that θ_{N} is greater than + θ₁₋₁ and less than + θ₁₋₂. When the first configuration 610 is selected, the electronic device 101 may identify that θ_{N} is included in the 2-1 range 612a. In this case, the electronic device 101 may control the display module 160 to express an object corresponding to the 2-1 range 612a. The object corresponding to the 2-1 range 612a may be, for example, an object indicating that a user is substantially gazing in a direction relatively to the right of the reference direction. When the second configuration 620 or the third configuration 630 is selected, the electronic device 101 may identify that θ_{N} is included in the first range 621 or 631. The electronic device 101 may control the display module 160 to express an object corresponding to the first range 621 or 631. The object corresponding to the first range 621 or 631 may be, for example, an object indicating that a user is substantially gazing in the reference direction.

It is assumed that θ_{N} is greater than + θ₁₋₂ and less than + θ₁₋₃. When the first configuration 610 or the second configuration 620 is selected, the electronic device 101 may identify that θ_{N} is included in the 2-1 range 612a or 622a. In this case, the electronic device 101 may control the display module 160 to express an object corresponding to the 2-1 range 612a or 622a. The object corresponding to the 2-1 range 612a or 622a may be, for example, an object indicating that a user is substantially gazing in a direction relatively to the right of the reference direction. When the third configuration 630 is selected, the electronic device 101 may identify that θ_{N} is included in the first range 631. The electronic device 101 may control the display module 160 to express an object corresponding to the first range 631. The object corresponding to the first range 631 may be, for example, an object indicating that a user is substantially gazing in the reference direction.

As described above, based on the configurations of the ranges, the objects expressed may be different even for the same difference (e.g., θ_{N} described above). As the first range is relatively narrow, the display retention sensitivity of the object may be expressed as relatively high. For example, in the first configuration 610, when the difference θ_{N} is greater than or equal to + θ₁₋₂ and less than + θ₁₋₃, the second object corresponding to the 2-1 range 612-a may be expressed, and in the second configuration 620, the first object corresponding to the first range 621 may be expressed. Accordingly, in the case in which the first object is initially expressed, the first range, which is a range in which the expression of the first object may be maintained, may be relatively narrow in the first configuration 610 than in the second configuration 620, and thus the display retention sensitivity of an object in the first configuration 610 may be relatively higher than the display retention sensitivity of an object in the second configuration 620.

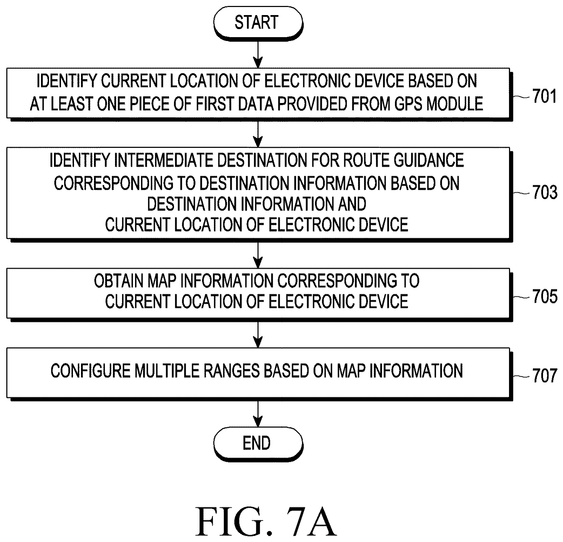

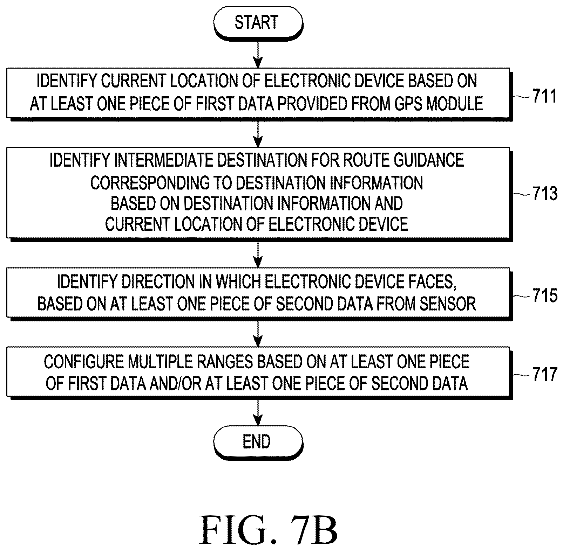

The electronic device 101 may select the configurations of the ranges based on various conditions. For example, the electronic device 101 may select configurations of ranges based on map information obtained for route guidance, and this will be described with reference to FIG. 7A. For example, the electronic device 101 may select configurations of ranges based on sensed data, and this will be described with reference to FIG. 7B. Alternatively, the electronic device 101 may select configurations of the ranges based on the user selection, and there is no limit to the selection method.

FIG. 7A illustrates a flowchart illustrating an operation method of an electronic device according to an embodiment.

According to an embodiment, in operation 701, the electronic device 101 may identify the current location of the electronic device 101 based on at least one piece of first data provided from the GPS module 170. In operation 703, the electronic device 101 may identify an intermediate destination for route guidance corresponding to destination information, based on the destination information and the current location of the electronic device 101. In operation 705, the electronic device 101 may obtain map information corresponding to the current location of the electronic device 101. The time when the electronic device 101 obtains map information in operation 705 is exemplary, and there is no limit to the time. In operation 707, the electronic device 101 may configure a plurality of ranges based on map information. For example, map information may be at least one piece of information for expressing a map related to the current location. Information for expressing a map may include, for example, information on the terrain and/or objects in the vicinity of the current location. For example, the electronic device 101 may configure a plurality of ranges based on information on the terrain and/or objects in the vicinity of the current location.

In an example, if there are a relatively large number of buildings (e.g., relatively tall buildings, but there is no limit) around the current location, for example, if the number is greater than or equal to a threshold (which may be a natural number greater than or equal to 1), the electronic device 101 may select a configuration having relatively low object express retention sensitivity based on map information. For example, if there are a relatively small number of buildings around the current location, for example, if the number is less than a threshold (which may be a natural number greater than or equal to 1), the electronic device 101 may select a configuration having relatively high object express retention sensitivity.

For example, when the number of buildings around the current location is identified as 0, the electronic device 101 may select the first configuration 610 described in FIG. 6. For example, when the number of buildings around the current location is identified as one, the electronic device 101 may select the second configuration 620 described in FIG. 6. For example, when the number of buildings around the current location is identified as two, the electronic device 101 may select the third configuration 630 described in FIG. 6. For example, the higher the number of relatively tall buildings in the vicinity, the higher the possibility that an error may occur in sensing data of the GPS module 170 and/or the sensor 180. Even if the possibility of an error is high, when the object express retention sensitivity is high (e.g., when the first configuration 610 is selected), the electronic device 101 may change the object relatively frequently according to the occurrence of an error. In cases where the possibility of error occurrence is relatively high, the electronic device 101 may select a configuration (e.g., the third configuration 630) in which the object express retention sensitivity is low. Accordingly, even when an error occurs, the possibility of relatively frequently changing an object may be decreased.

For example, in the example of FIG. 2A, when the electronic device 101 is located at location 202, a configuration having low object express retention sensitivity (e.g., the third configuration 630) may be selected based on the relatively large number of buildings in the vicinity. For example, when the electronic device 101 is located at location 204, a configuration having high object express retention sensitivity (e.g., the first configuration 610) may be selected based on the relatively small number of buildings in the vicinity.

Meanwhile, the electronic device 101 may configure the ranges based on the number of forks around the current location based on map information. For example, when it is identified that the number of forks around the current location is 0 (i.e., when there is one path corresponding to the direction of travel), the electronic device 101 may select the third configuration 630 described in FIG. 6. For example, when it is identified that the number of forks around the current location is one, the electronic device 101 may select the second configuration 620 described in FIG. 6. For example, if it is identified that the number of forks around the current location is two, the electronic device 101 may select the first configuration 610 described in FIG. 6. For example, when the number of forks is relatively large, the possibility that a user will deviate from a route may be relatively high, and thus, it is required to provide correct route guidance by causing the user to focus on a reference direction. Accordingly, when the number of forks is relatively large, a configuration having high object express retention sensitivity (e.g., the first configuration 610) may be selected. Meanwhile, when the number of forks is relatively small or 0, a configuration having low object express retention sensitivity (e.g., the third configuration 630) may be selected.

For example, in the example of FIG. 2A, when the electronic device 101 is located at location 202, a configuration having low object express retention sensitivity (e.g., the third configuration 630) may be selected based on the fact that there is no fork in the vicinity. For example, when the electronic device 101 is located at location 204, a configuration having high object express retention sensitivity (e.g., the first configuration 610) may be selected based on the fact that there are relatively many forks in the vicinity.

FIG. 7B illustrates a flowchart illustrating an operation method of an electronic device according to an embodiment.

According to an embodiment, in operation 711, the electronic device 101 may identify the current location of the electronic device 101 based on at least one piece of first data provided from the GPS module 170. In operation 713, the electronic device 101 may identify an intermediate destination for route guidance corresponding to destination information, based on the destination information and the current location of the electronic device. In operation 715, the electronic device 101 may identify a direction in which the electronic device 101 is facing based on at least one piece of second data from the sensor 180. In operation 717, the electronic device 101 may configure a plurality of ranges based on at least one piece of first data and/or at least one piece of second data. Meanwhile, the time at which the plurality of ranges are configured in operation 717 is exemplary, and there is no limit to the time. For example, the electronic device 101 may identify a possibility of an error occurring based on at least one piece of first data and/or at least one piece of second data.

For example, the electronic device 101 may identify the strength of a GPS satellite signal from the GPS module 170. The electronic device 101 may identify a possibility of an error occurring based on the strength of the GPS satellite signal. For example, it may be identified that the possibility of an error occurring is relatively high as the strength of the GPS satellite signal is relatively low, but there is no limit thereto. For example, the electronic device 101 may identify a possibility of an error occurring based not only on at least one piece of first data and/or at least one piece of second data but also on the analysis of time-series data based on data identified at least one previous time point. For example, the electronic device 101 may identify a possibility of an error occurring based on whether the time-series data satisfies a condition indicating the possibility of an error, and/or a result of inference of an AI model for determining the possibility of an error, but there is no limit to the method. If, despite the high possibility of error occurrence, the object express retention sensitivity is high (e.g., when the first configuration 610 is selected), the electronic device 101 is likely to relatively frequently change the object according to the occurrence of an error. In a case of relatively high possibility of occurrence of an error, the electronic device 101 may select a configuration (e.g., the third configuration 630) having low object express retention sensitivity. Accordingly, even if an error occurs, the possibility of relatively frequently changing an object may be reduced.

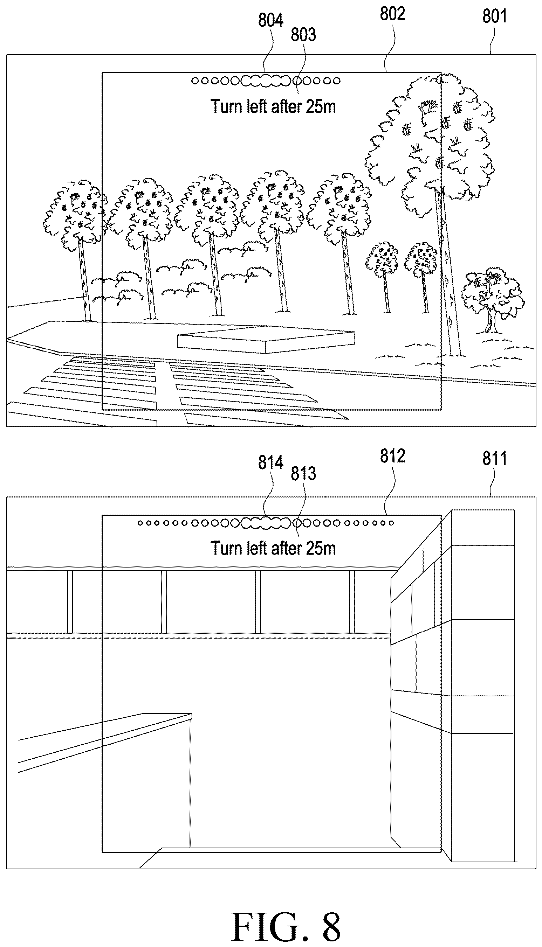

FIG. 8 is a diagram illustrating implementation of an object according to an embodiment.

According to an embodiment, the electronic device 101 may be configured to express different objects corresponding to the same range according to a selected configuration. For example, the electronic device 101 may select a configuration (e.g., the first configuration 610 in FIG. 6) having high object express retention sensitivity. For example, in reference to a first foreground 801, there may be no buildings around the electronic device 101. As described above, the electronic device 101 may select a configuration (e.g., the first configuration 610 in FIG. 6) having high object express retention sensitivity due to the absence of buildings. Meanwhile, the electronic device 101 may identify that a difference between the reference direction and the direction in which the electronic device 101 is facing is included in the first range 611. The electronic device 101 may control the display module 160 such that a first object 804 corresponding to the first range 611 of the first configuration 610 is expressed on at least one display area 802 of the display module 160. The electronic device 101 may control the display module 160 to express an object 803 for route guidance.

For example, the electronic device 101 may select a configuration (e.g., the third configuration 630 in FIG. 6) having low object express retention sensitivity. For example, in reference to a second foreground 811, there may buildings around the electronic device 101. As described above, the electronic device 101 may select a configuration (e.g., the third configuration 630 in FIG. 6) having low object express retention sensitivity due to the presence of buildings. Meanwhile, the electronic device 101 may identify that a difference between the reference direction and the direction in which the electronic device 101 is facing is included in the first range 631. The electronic device 101 may control the display module 160 such that a first object 814 corresponding to the first range 631 of the third configuration 630 is expressed on at least one display area 812 of the display module 160. The electronic device 101 may control the display module 160 to express an object 813 for route guidance.

In the example of FIG. 8, the first object 804 corresponding to the first range 611 of the first configuration 610 and the first object 814 corresponding to the first range 631 of the third configuration 630 may be implemented to have different shapes. For example, the spacing between the sub-objects that constitute the first object 804 corresponding to the first range 611 of the first configuration 610 may be smaller than the spacing between the sub-objects that constitute the first object 814 corresponding to the first range 631 of the third configuration 630. Meanwhile, the shapes of the two objects 804 and 814 being implemented differently are merely exemplary, and the shapes, properties, and/or locations of the two objects 804 and 814 may be differently expressed. Meanwhile, according to an implementation, the two objects 804 and 814 may be expressed identically.

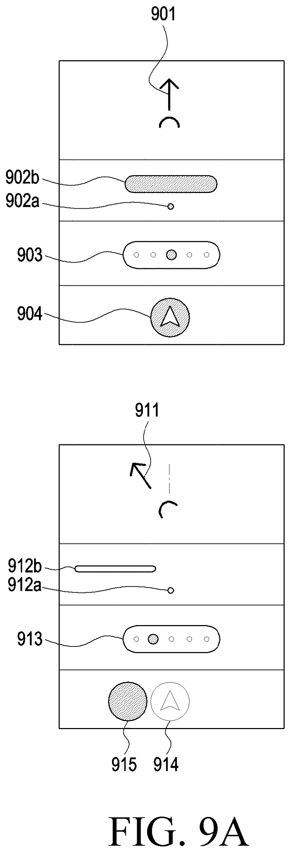

FIG. 9A is a diagram illustrating an example of an object according to an embodiment.

According to an embodiment, the electronic device 101 may control the display module 160 to express an object corresponding to a first range, based on a difference between the reference direction and the direction in which the electronic device 101 is facing being included in the first range. In addition, based on the fact that the difference between the reference direction and the direction in which the electronic device 101 is facing is out of the first range and included in the second range, the electronic device 101 may control the display module 160 to express an object corresponding to the first range. An object 901 is an example of an object corresponding to the first range, and may be a graphic object that indicates, for example, that a user is gazing forward. When it is identified that the difference is out of the first range and included in the second range, an object 911 may be expressed instead of the object 901. For example, the object 911 may be a graphic object that indicates that a user is gazing to the left relative to the reference direction. For example, the electronic device 101 may express the object 911 that indicates that a user is gazing to the left relative to the reference direction, based on the difference being included in the 2-2 area 232b or the 3-2 area 233b of FIG. 2B. Meanwhile, the above is an example, and the electronic device 101 may be implemented to express the object 911, based on the difference being included in the 2-1 area 232a or the 3-1 area 233a of FIG. 2B (that is, when it is identified that the user is gazing to the right relatively to the reference direction). In this case, the arrow pointing to the left relatively to the object 911 may also mean that the user should gaze to the left relatively to the current viewpoint to gaze in the reference direction. Those skilled in the art will appreciate that the objects described in the embodiment and other embodiments may not only be expressed when a user is recognized as gazing in a specific direction relative to a reference direction, but may also be expressed when a user is recognized as gazing in the opposite direction of the specific direction.

For example, the sub-objects 902a and 902b may be examples of objects corresponding to the first range. The sub-object 902a may be, for example, a graphic object indicating a reference direction. The sub-object 902b may, for example, mean a direction in which the user is gazing (or a direction in which the user should gaze to gaze in the reference direction), based on the reference direction. In the first range, the coordinate of the center of the sub-object 902b on a first axis (e.g., the horizontal direction axis) may be configured to be substantially the same as, for example, the coordinate of the sub-object 902a on the first axis, but there is no limit thereto. When it is identified that the difference is out of the first range and included in the second range, sub-objects 912a and 912b may be expressed instead of the sub-objects 902a and 902b. The sub-object 912a may be a graphic object that, for example, indicates a reference direction, and may be expressed in a substantially same shape and/or location as the sub-object 912a. The sub-object 912b may, for example, mean a direction in which the user is gazing (or a direction in which the user should gaze to gaze in the reference direction), based on the reference direction. For example, the sub-object 912b may be a graphic object that indicates that a user is gazing to the left relative to the reference direction (or the user needs to gaze to relatively the left to gaze in the reference direction). The coordinate of the center of the sub-object 912b in the first axis (e.g., the horizontal direction axis) may be configured relatively to the left of the coordinate of the first axis of the sub-object 902a, but there is no limit thereto.

For example, an object 903 may be an example of an object corresponding to the first range. The object 903 may be expressed to include the candidate locations and an indicator for selecting one of the candidate locations. The locations of the indicator and the remaining candidates may be expressed so as to be visually distinguishable. The indicator in the object 903 may be expressed as being placed on (or covering the object corresponding to a candidate) the candidate location substantially located in the center. When it is identified that the difference is out of the first range and included in the second range, the object 913 may be expressed instead of the object 903. The indicator in the object 913 may be expressed so as to be disposed on (or covering the object corresponding to a candidate) a relatively left candidate location. Accordingly, by recognizing the object 913, the user may recognize that he or she is gazing to the left relative to the reference direction (or the user needs to gaze relatively to the left to gaze in the reference direction).

For example, an object 904 may be an example of an object corresponding to the first range. For example, the object 904 may be a graphic object that indicates that a user is substantially gazing in the reference direction. When it is identified that the difference is out of the first range and included in the second range, the sub-objects 914 and 915 may be expressed instead of the object 904. The sub-object 915 may be a graphic object that, for example, indicates a reference direction, and may be expressed in a substantially same location as the object 904. The sub-object 914 may, for example, mean a direction in which the user is gazing (or a direction in which the user should gaze to gaze in the reference direction), based on the reference direction. For example, the sub-object 914 may be a graphic object that indicates that a user is gazing to the left relative to the reference direction (or the user needs to gaze relatively to the left to gaze in the reference direction). The coordinate of the center of the sub-object 914 in the first axis (e.g., the horizontal direction axis) may be configured relatively to the left of the coordinate of the first axis of the sub-object 915, but there is no limit thereto. Accordingly, by recognizing the sub-objects 914 and 915, the user may recognize that he or she is gazing to the left relative to the reference direction (or the user needs to gaze relatively to the left to gaze in the reference direction). For example, the object 904 may be expressed in the shape of the combination of the sub-objects 914 and 915, and accordingly, a user may rotate their head until the object 904 is expressed.

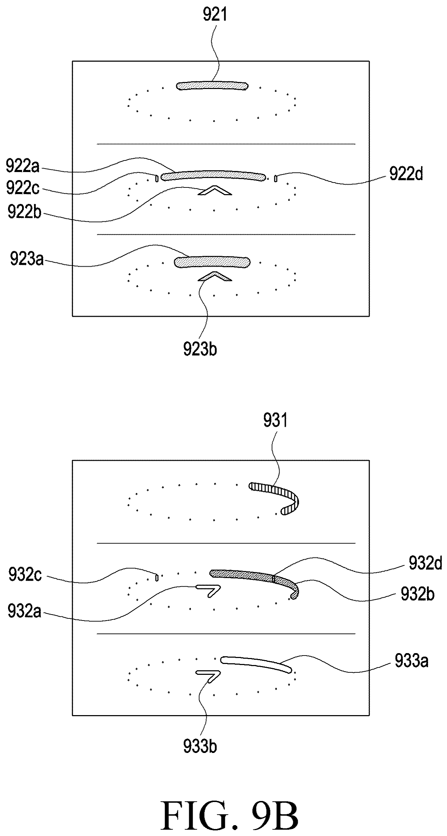

FIG. 9B is a diagram illustrating an example of an object according to an embodiment.

For example, an object 921 is an example of an object corresponding to the first range, and may be a graphic object that indicates, for example, that a user is gazing forward. For example, the object 921 may be expressed on (or to cover) some of the sub-objects indicating an elliptical-shaped orbit. The object 921 may have a shape corresponding to a line connecting some of the elliptical-shaped orbits, but is not limited thereto. Meanwhile, when it is identified that the difference is out of the first range and being included in the second range, an object 931 may be expressed instead of the object 921. For example, the object 931 may be a graphic object that indicates that the user is gazing to the right relative to the reference direction (or the user needs to gaze relatively to the right to gaze in the reference direction). The object 931 may be expressed on (or to cover) a portion corresponding to the relatively right side of the elliptical-shaped orbit. Depending on the implementation, the object 931 may be expressed with, for example, a property (e.g., a color, a size, and/or a transparency, but no limit thereto) different from that of the object 921, but there is no limit thereto.

For example, sub-objects 922a, 922b, 922c, and 922d may be examples of an object corresponding to the first range. The sub-objects 922c and 922d may be, for example, graphic objects for indicating a boundary of the first range. The sub-object sub-objects 922a and 922b, for example, mean directions in which the user is gazing (or a direction in which the user should gaze to gaze in the reference direction), based on the reference direction. For example, when a difference between the reference direction and the direction in which the electronic device 101 is facing is included in the first range, the sub-object 922a may be expressed as being located between the sub-objects 922c and 922d. In addition, when a difference between the reference direction and the direction in which the electronic device 101 is facing is included in the first range, the sub-object 922b may be expressed as an arrow indicating a direction corresponding to the first range, but there is no limit thereto. When it is identified that the difference is out of the first range and included in the second range, sub-objects 932a and 932b may be expressed instead of the sub-objects 922a and 922b. Meanwhile, the sub-objects 932c and 932d may be expressed substantially the same as the sub-objects 922c and 922d in the first range. The sub-object 932a may be, for example, expressed to be out of the sub-objects 922c and 922d. The sub-object 932b may be expressed as an arrow indicating a direction corresponding to the second range, but there is no limit thereto.

For example, sub-objects 923a and 923b may be examples of an object corresponding to the first range. For example, when a difference between the reference direction and the direction in which the electronic device 101 is facing is included in the first range, the sub-object 923a may be expressed, and when the difference is included in the second range, the sub-object 933a may be expressed. The properties of the sub-object 923a may be configured to be different from that of the sub-object 933a, but there is no limit thereto. When a difference between the reference direction and the direction in which the electronic device 101 is facing is included in the first range, the sub-object 923b may be expressed, and when the difference is included in the second range, the sub-object 933b may be expressed. The property of the sub-object 923b may be configured to be different from that of the sub-object 933b, but there is no limit thereto.

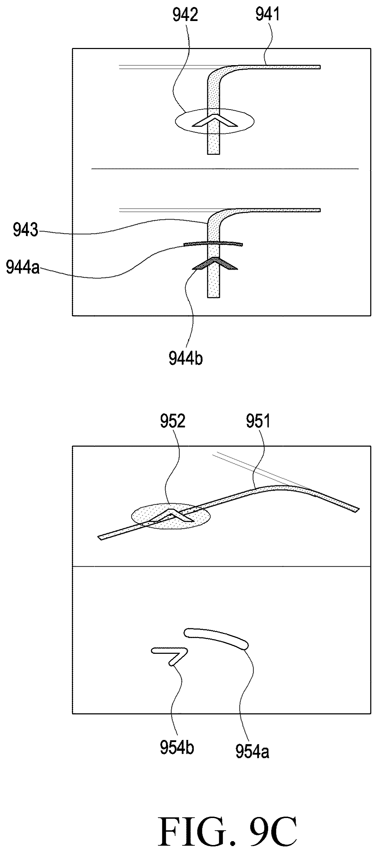

FIG. 9C is a diagram illustrating an example of an object according to an embodiment.

For example, an object 942 may be an example of an object corresponding to the first range, and may be expressed together with (or on) an object 941 for route guidance to an intermediate destination (or a destination). Meanwhile, an object 952 may be an example of an object corresponding to the second range, and may, for example, be expressed together with (or on) an object 951 for route guidance.

For example, the sub-objects 944a and 944b may be examples of objects corresponding to the first range, and may be expressed together with (or on) the object 943 for route guidance to an intermediate destination (or a destination). For example, the sub-objects 954a and 954b may be an example of an object corresponding to the second range. For example, when the difference is out of the first range, the expression of the object for route guidance may not be maintained, but there is no limit thereto.

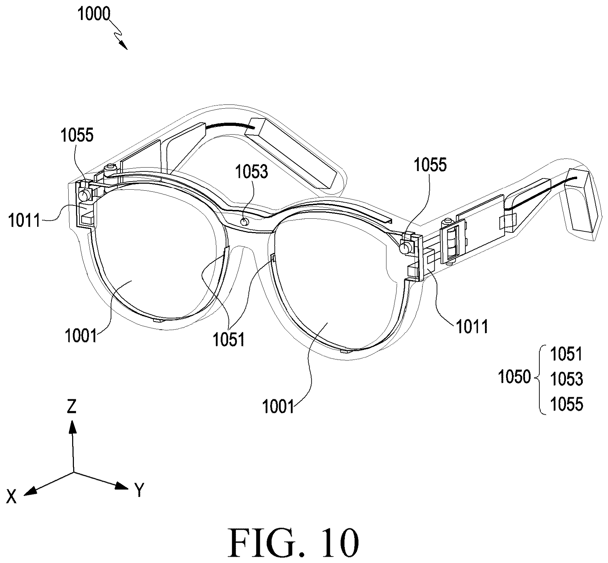

FIG. 10 is a perspective view illustrating an internal configuration of a wearable electronic device according to an embodiment of the disclosure.

Referring to FIG. 10, the wearable electronic device 1000 according to an embodiment of the disclosure may include at least one of a light output module 1011, a display member 1001, and a camera module 1050.

According to an embodiment of the disclosure, the light output module 1011 may include a light source capable of outputting an image, and a lens that guides the image to the display member 1001. According to an embodiment of the disclosure, the light output module 1011 may include at least one of a liquid crystal display (LCD), a digital mirror device (DMD), a liquid crystal on silicon (LCoS), an organic light emitting diode (OLED), or a micro light emitting diode (micro LED).

According to an embodiment of the disclosure, the display member 1001 may include an optical waveguide (e.g., a waveguide). According to an embodiment of the disclosure, an image output from the light output module 1011 incident on one end of the optical waveguide may propagate inside the optical waveguide and may then be provided to a user. According to an embodiment of the disclosure, the optical waveguide may include at least one of a diffractive element (e.g., a diffractive optical element (DOE) or a holographic optical element (HOE)) or a reflective element (e.g., a reflective mirror). For example, the optical waveguide may induce an image output from the light output module 1011 to the user's eyes by using at least one diffractive element or reflective element.

According to an embodiment of the disclosure, the camera module 1050 may capture a still image and/or a video. According to an embodiment, the camera module 1050 may be disposed in a lens frame and may be disposed around the display member 1001.

According to an embodiment of the disclosure, a first camera module 1051 may capture and/or recognize the user's eye (e.g., the pupil or the iris) or the trajectory of the user's gaze. According to an embodiment of the disclosure, the first camera module 1051 may periodically or aperiodically transmit, to a processor (e.g., the processor 120 of FIG. 1), information (e.g., trajectory information) related to the trajectory of the user's eye or gaze.

According to an embodiment of the disclosure, a second camera module 1053 may capture an external image.

According to an embodiment of the disclosure, a third camera module 1055 may be used for hand detection, tracking, and recognition of a user's gesture (e.g., hand motion). The third camera module 1055 according to an embodiment of the disclosure may be used for head tracking of 3 degrees of freedom (3DoF) and 6DoF, location (space, environmental) recognition, and/or movement recognition. The second camera module 1053 may be used for hand detection, tracking, and recognition of a user's gesture according to an embodiment of the disclosure. According to an embodiment of the disclosure, at least one of the first camera module 1051 to the third camera module 1055 may be replaced with a sensor module (e.g., a LiDAR sensor). For example, the sensor module may include at least one of a vertical cavity surface emitting laser (VCSEL), an infrared sensor, and/or a photodiode.

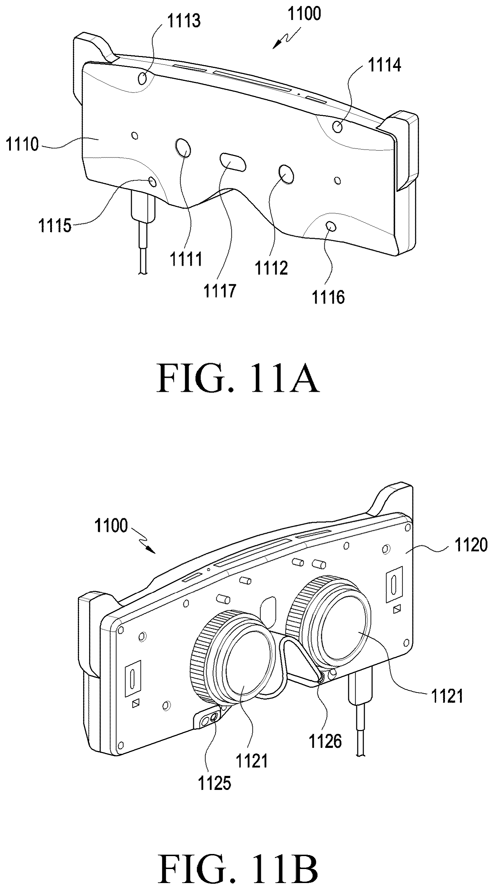

FIGS. 11A and 11B are diagrams illustrating a front and a rear of a wearable electronic device 1100 according to an embodiment.

Referring to FIGS. 11A and 11B, in an embodiment, camera modules 1111, 1112, 1113, 1114, 1115, and 1116 and/or a depth sensor 1117 for obtaining information related to the surrounding environment of the wearable electronic device 1100 may be disposed on a first surface 1110 of the housing.

In an embodiment, the camera modules 1111 and 1112 may obtain an image related to the surrounding environment of the wearable electronic device.

In an embodiment, the camera modules 1113, 1114, 1115, and 1116 may obtain an image while the wearable electronic device is worn by the user. The camera modules 1113, 1114, 1115, and 1116 may be used for hand detection, tracking, and recognition of a user's gesture (e.g., hand motion). The camera modules 1113, 1114, 1115, and 1116 may be used for head tracking of 3DoF and 6DoF, location (space, environmental) recognition, and/or movement recognition. In an embodiment, the camera modules 1111 and 1112 may be used for hand detection, tracking, and a user's gesture.

In an embodiment, the depth sensor 1117 may be configured to transmit a signal and receive a signal reflected from a subject, and may be used to identify the distance to an object, such as time of flight (TOF). The depth sensor 1117 may be replaced by or supplemented with the camera modules 1113, 1114, 1115, and 1116 to identify the distance to an object.

According to an embodiment, face recognition camera modules 1125 and 1126 and/or a display 1121 (and/or a lens) may be disposed on a second surface 1120 of the housing.

In an embodiment, the face recognition camera modules 1125 and 1126 adjacent to the display may be used for recognizing a user's face or may recognize and/or track both eyes of the user.

In an embodiment, the display 1121 (and/or lens) may be disposed on the second surface 1120 of the wearable electronic device 1100. In an embodiment, the wearable electronic device 1100 may not include the camera modules 1115 and 1116 among a plurality of camera modules 1113, 1114, 1115, and 1116. Although not illustrated in FIGS. 3A and 3B, the wearable electronic device 1100 may further include at least one of the configurations illustrated in FIG. 2.

As described above, the wearable electronic device 1100 according to an embodiment may have a form factor for being worn on the user's head. The wearable electronic device 1100 may further include a strap for being fixed on the user's body and/or a wearing member. The wearable electronic device 1100 may provide a user experience based on augmented reality, virtual reality, and/or mixed reality within a state worn on the user's head.

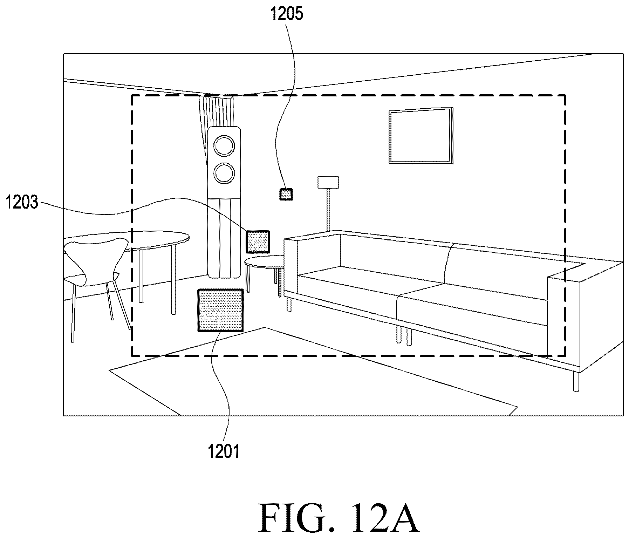

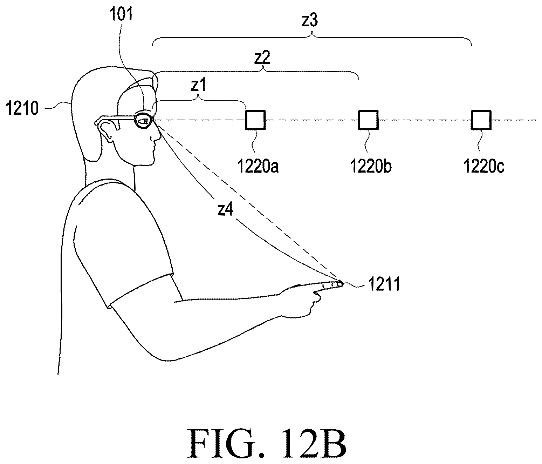

FIG. 12A is a diagram illustrating expression of an object for a virtual service according to an embodiment. The embodiment of FIG. 12A will be described with reference to FIG. 12B. FIG. 12B is a diagram illustrating depth information of an object according to an embodiment.

According to an embodiment, the electronic device 101 may express an object based on detecting an event that causes expression of the object. For example, the electronic device 101 may provide an AR service or a mixed reality (MR) service (which may also be referred to as an XR service). In this case, the electronic device 101 may express an object for indicating information related to an object included in a real environment (or a real scene), for indicating information independent therefrom, and/or for executing (or calling) a function. In FIG. 12A, for example, objects 1201, 1203, and 1205 may be expressed as being disposed in a real environment (or real scene) shown to a user through a transparent display member 1001 for an AR service. For example, the electronic device 101 may configure the depth information of each of the specific objects 1220a, 1220b, and 1220c as z1, z2, and z3, respectively, as illustrated in FIG. 12B. For example, it is assumed that the shapes of the specific objects 1220a, 1220b, and 1220c are the same. Depth information may be, for example, information for expressing a distance (or a degree) in a direction away from a user 1210 (or the electronic device 101) in a three-dimensional space (e.g., in the case of an AR service, a real environment, or in the case of a VR service, a virtual environment). For example, when the depth information is expressed as a depth value, the larger the depth value, the farther away it may be expressed from the user 1210 (or the electronic device 101). For example, it is assumed that depth information corresponding to the object 1220a is z1, and depth information corresponding to the object 1220b is z2. As illustrated in FIG. 12A, the electronic device 101 may express the object 1201 corresponding to the object 1220a as being relatively closer to the user 1210 (or the electronic device 101) than the object 1203 corresponding to the object 1220b. For example, it is assumed that depth information corresponding to the object 1220b is z2, and depth information corresponding to the object 1220c is z3. As illustrated in FIG. 12A, the electronic device 101 may express the object 1202 corresponding to the object 1220b as being relatively closer to the user 1210 (or the electronic device 101) than the object 1205 corresponding to the object 1220c. In FIG. 12A, for example, the size of an object arranged relatively closer to the user 1210 may be expressed as relatively larger, but this is merely illustrative, and there is no limit to the method for expressing the object's near/far arrangement. Meanwhile, the above-described AR service is merely an example, and for example, the electronic device 101 may provide a VR service, and may display information related to a virtual environment, display information independent therefrom, and/or express an object for performing a function.

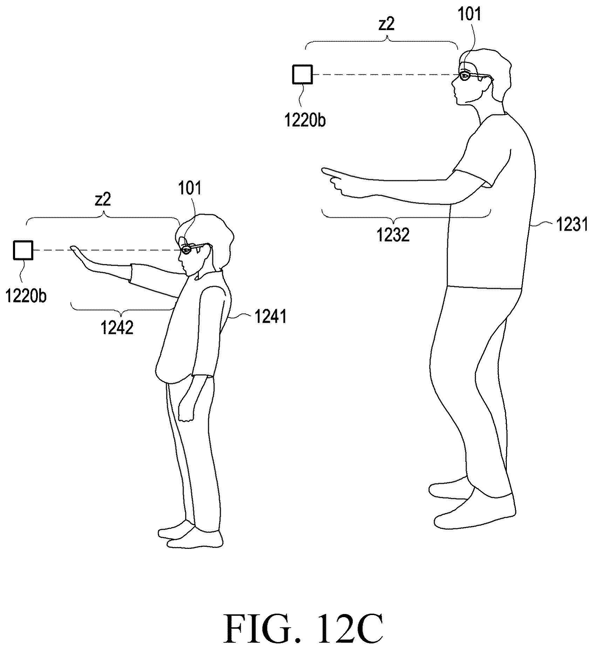

Referring back to FIG. 12B, the electronic device 101 may identify the location of a finger 1211 as a part of the user's body. As illustrated in FIG. 12B, identifying the location of the finger 1211 is merely an example, and there is no limit to the part of the body for selecting (or, operating, interacting, controlling, designating, or identifying) an object by the electronic device 101, and the location of not only the body but also an external electronic device (e.g., a controller, a ring, but there is no limit thereto) may be identified. As described above, the electronic device 101 may continuously identify the location of the finger 1211, and this may also be referred to as tracking. The electronic device 101 may, for example, identify the three-dimensional location of the finger 1211. For example, the electronic device 101 may identify the location of the finger 1211 as (z4, θ4, φ4) in the three-dimensional angular coordinate system. Meanwhile, the electronic device 101 may configure the locations of the objects 1220a, 1220b, and 1220c as (z1, 01, φ1), (z2, θ2, φ2), and (z3, 03, φ3), respectively. For example, the electronic device 101 may identify that the object 1220b is selected by the finger 1211 when the distance between the location (z4, θ4, φ4) of the finger 1211 and the location (z2, θ2, φ2) of the object 1220b is equal to or less than a threshold distance, but the method of identifying whether the object is selected is not limited thereto. The locations (z1, θ1, φ1), (z2, θ2, φ2), and (z3, θ3, φ3) of each of the objects 1220a, 1220b, and 1220c may be previously configured. Accordingly, a situation may occur in which it is difficult to select the location depending on the length of the user 1210, and this will be described with reference to FIG. 12C.

FIG. 12C is a diagram illustrating whether an object is to be selected based on the length of a user's arm, according to a comparative example for comparison with an embodiment.

For example, a user 1231 may have an arm of a first length 1232, and a user 1241 may have an arm of a second length 1242. The electronic device 101 may detect an event configured to cause expression of, for example, the object 1220b, and may express that the object 1220b is placed at the location z2 from each of the users 1231 and 1241 (or from the electronic device 101) in response thereto. As described above, the electronic device 101 may track at least a part (e.g., a finger, but not limited thereto) of the body of each of the users 1231 and 1241. The electronic device 101 may identify the location of at least a part of the body in real time, and may identify whether the object 1220b is selected by the user based on the identified location. For example, the user 1231 may change the location of a finger by using an arm of a relatively long first length 1232. In this case, based on the location of the finger corresponding to the location of the object 1220b (e.g., the difference in locations being less than or equal to a threshold value), the electronic device 101 may identify that the object 1220b has been selected by the user 1231.

In a comparative example, the electronic device 101 may express the object 1220b as being disposed at the same location (e.g., a location spaced z2 from the user) in bulk, without considering the arm lengths of the users 1231 and 1241. Meanwhile, the user 1241 may attempt to select the object 1220b with a finger by using an arm of a relatively short second length 1242. However, since the second length 1242 is relatively short, the user 1241 may have difficulty in selecting the object 1220b. Accordingly, the location where the object 1220b is to be located needs to be configured in consideration of a physical condition, such as the arm length of the user 1241. According to embodiments of the disclosure, the electronic device 101 may provide content for identifying a user's physical condition (or identifying an object's express location), and may identify the user's physical condition (or the object's express location), based on sensing data identified during (or after) the content provision. The electronic device 101 may configure an object express location, based on the identified user's physical condition (or the object express location). For example, as the second arm length 1242 of the user 1241 is relatively short, the electronic device 101 may express that the object 1220b is placed at a location closer to z2, and this will be described below.

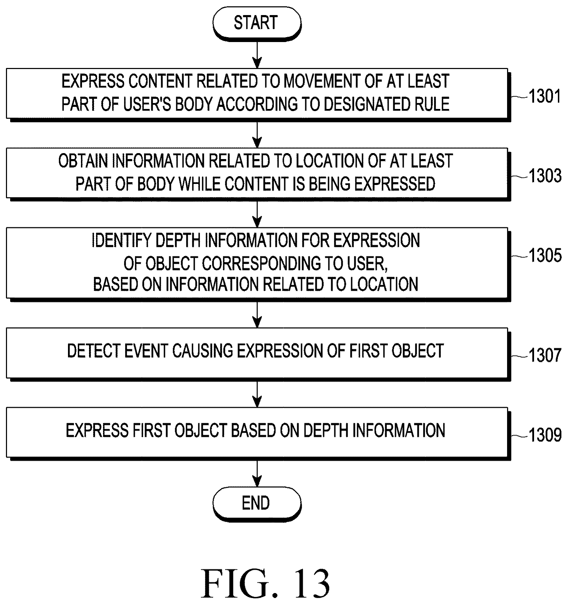

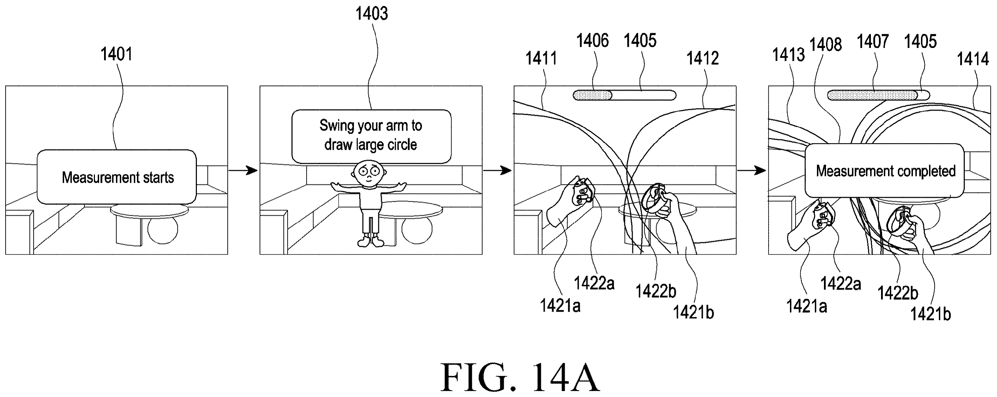

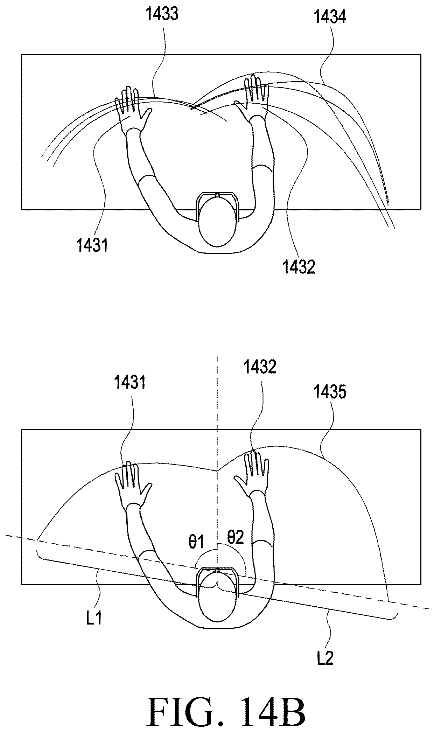

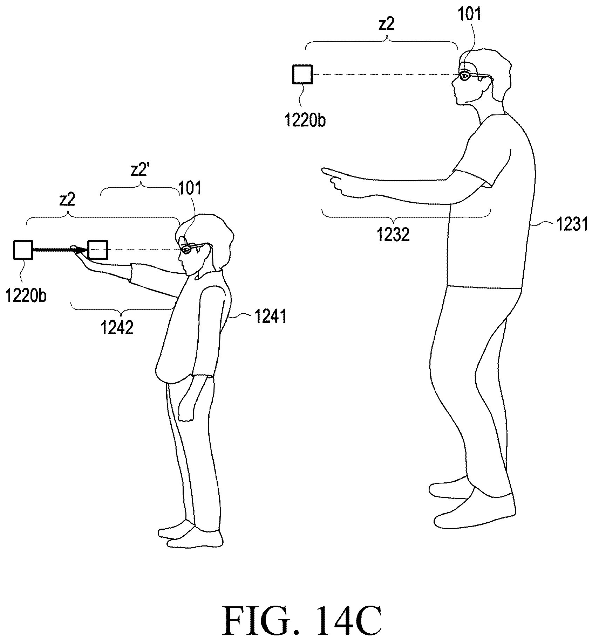

FIG. 13 is a flowchart illustrating an operation method of an electronic device according to an embodiment. The embodiment of FIG. 13 will be described with reference to FIGS. 14A to 14C. FIG. 14A is a diagram illustrating content according to an embodiment. FIG. 14B is a diagram illustrating information related to a location identified during provision of content according to an embodiment. FIG. 14C is a diagram illustrating an expression of content according to an embodiment.

Referring to FIG. 13, according to an embodiment, in operation 1301, the electronic device 101 may express content related to movement of at least a part of the user's body according to a designated rule. For example, the electronic device 101 may express content 1401 and 1403 as illustrated in FIG. 14A. The content 1401 may be a pop-up window including, for example, text such as "Measurement starts" but there is no limit to the method and/or type of expression of the content. The content 1403 may be a pop-up window including text related to movement of at least part of the user's body according to a designated rule. For example, the text may be text that describes a designated rule, such as "Please swing your arm to draw a large circle". Meanwhile, the method of describing the designated rule is not limited to text, and may be expressed as a video for recognizing the corresponding rule, and there is no limit to the method of expression.

Referring back to FIG. 13, in operation 1303, the electronic device 101 may obtain information related to a location of at least part of the body while content is being expressed. For example, referring back to FIG. 14A, the electronic device 101 may express content 1405 and 1406. The content 1405 may have, for example, a shape representing a progress bar having a length corresponding to the number of tasks for completion of a designated rule. Content 1406 of an indicator indicating the progress may be expressed on content 1405 of the progress bar. For example, the content 1406 of the indicator may be expressed as having a length corresponding to a task that has already been performed among the tasks related to the designated rule, but there is no limit thereto. Accordingly, the user may identify the number (or ratio) of remaining tasks for completing the designated rule by identifying the length of the indicator in comparison to the entire length of the progress bar. For example, as a task for completing the designated rule is further performed, the electronic device 101 may express content 1407 corresponding to an updated indicator, as illustrated in FIG. 14.

For example, the user may perform the requested action of swinging their arms in a circular shape based on the text within the content 1403. In an example, the electronic device 101 may track user's hands 1421a or 1421b. The electronic device 101 may express the tracking trajectories 1411 and 1412 of the user's hands 1421a and 1421b, but this is only an example and there is no limit thereto. The tracking trajectories 1411 and 1412 may also be replaced and expressed as the updated tracking trajectories 1413 and 1414 according to further movement of the user's hands 1421a and 1421b. The electronic device 101 may identify at least one location of the user's hands 1421a and 1421b as information related to the location of at least a part of the body. In an example, the electronic device 101 may identify at least one location of the user's hand 1421a or 1421b, based on at least one image identified based on a camera module and/or a depth camera module disposed therein. For example, the electronic device 101 may identify a 3D location based on at least one image, but there is no limit to the method of identifying the three-dimensional location. In an example, the electronic device 101 may receive data sensed by external electronic devices 1422a or 1422b that are grasped by the user's hand 1421a or 1421b. For example, the external electronic devices 1422a and 1422b may obtain sensing data based on at least one sensor (e.g., an accelerometer, a gyro sensor, and/or a geomagnetic sensor, but there is no limit thereto), for measuring movement. The electronic device 101 may identify 3D locations of the user's hand 1421a or 1421b, based on sensing data received from the external electronic device 1422a or 1422b. Meanwhile, the above-described tracking method is merely an example, and there is no limit to the tracking method.

Referring back to FIG. 13, in operation 1305, the electronic device 101 may identify depth information for object expression corresponding to the user, based on information related to a location. For example, the electronic device 101 may identify the length of an arm as depth information. For example, the electronic device 101 may identify, as depth information, information on a reachable area of a hand. For example, referring to FIG. 14B, the electronic device 101 may identify information related to at least one location 1433 or 1434 according to the movement of each of the user's hands 1431 and 1432. The electronic device 101 may identify the area and the area information 1435 based on information related to the locations 1433 and 1434. For example, the electronic device 101 may identify the area information 1435 based on performing smoothing on the connecting line of the locations 1433 and1434, but there is no limit to the method of identifying the area information 1435. The area information 1435 may include, for example, an area of -θ1° to 0° based on the length of L1 and an area of 0° to +θ2° based on the length of L2. Meanwhile, the above-described expression of the area information in the two-dimensional angular coordinate system is merely an example, and the area information may be expressed in three dimensions, and in which case, a component in the φ direction may be additionally included. For example, the electronic device 101 may manage the length L1 of the user's left arm and the length L2 of the user's right arm, respectively. In this case, when the electronic device 101 expresses an object located relatively to the left in the virtual space, the electronic device 101 may express the object based on the length L1 of the user's left arm and/or the area (the area from -θ1° to 0° based on the length L1). When the electronic device 101 expresses an object located relatively to the right in the virtual space, the electronic device 101 may express the object based on the length L2 of the user's right arm and/or the area (the area from -0° to +θ2° based on the length L2).

Referring back to FIG. 13, in operation 1307, the electronic device 101 may detect an event that causes expression of a first object. In operation 1309, the electronic device 101 may express the first object based on depth information, based on event detection. For example, referring to FIG. 14C, the electronic device 101 may identify depth information for expressing an object corresponding to the user 1231. For example, the electronic device 101 may identify the first length 1232 of the arm of the user 1231 as depth information, but this is exemplary and area information corresponding to the user 1231 in FIG. 14B may be identified as depth information. In addition, the electronic device 101 may identify depth information for expressing an object corresponding to the user 1241. For example, the electronic device 101 may identify the second length 1242 of the arm of the user 1241 as depth information, but this is exemplary and area information corresponding to the user 1241 in FIG. 14B may be identified as depth information. The electronic device 101 may detect an event configured to express the object 1220b, and may express the object 1220b accordingly. For example, an expression location of the object 1220b in the depth direction may be z2. The electronic device 101 may, based on the first length 1232 of the arm of the user 1231 being greater than z2 that is the expression location, express the object 1220b as being placed at z2. The electronic device 101 may, based on the second length 1242 of the arm of the user 1241 being smaller than z2 that is the expression location, express the object 1220 as being disposed at the adjusted depth z2'. In an example, the adjusted depth z2' may be configured based on z2, or may be configured independently from z2, but there is no limit to the configuration method. For example, z2' may be expressed as being located at a distance shorter than the second length 1242 of the arm of the user 1241 (or as being included in area information corresponding to the user 1241). When the object 1220b is expressed as being located at z2, the user 1241 has difficulty in designating the object 1220b. Since the object 1220b is expressed as being located at z2', the user 1241 may easily designate the object 1220b. As described above, since different depth information is managed for each user, the same object may be expressed as being located at a different location in the depth direction for each user.

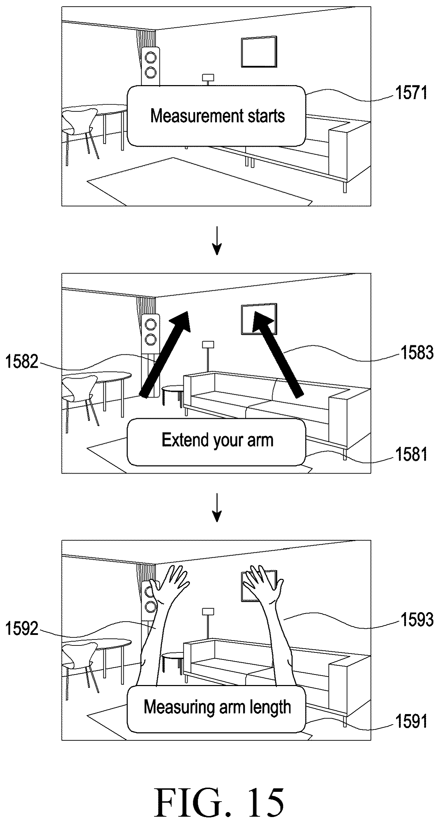

FIG. 15 is a diagram illustrating an example of content according to an embodiment.

According to an embodiment, the electronic device 101 may express content 1571 and 1581. The content 1571 may be a pop-up window including, for example, text such as "Measurement starts," but there is no limit to the expression method and/or type of content. The content 1581 may be a pop-up window including text related to movement of at least a part of the user's body according to a designated rule. For example, the text may be text that describes a designated rule, such as "Extend your arm". The electronic device 101 may also express content 1582 and 1583 for describing the extension direction of the arm, but there is no limit to the expression method. For example, the electronic device 101 may also express content indicating a shape of a hand. The electronic device 101 may identify the user's hands 1592 and 1593 while expressing content 1591. For example, the electronic device 101 may identify the length of the user's arm and/or area information corresponding to the user as depth information based on the location of the hands 1592 and 1593. The electronic device 101 may express an object, based on the length of the user's arm and/or area information corresponding to the user.

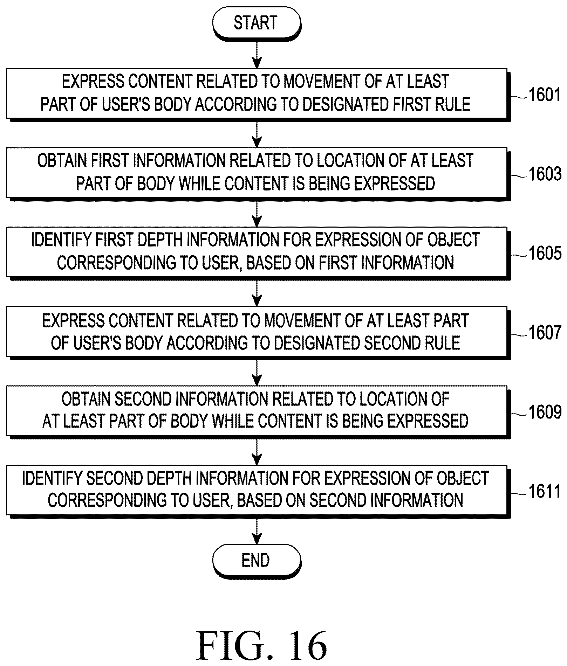

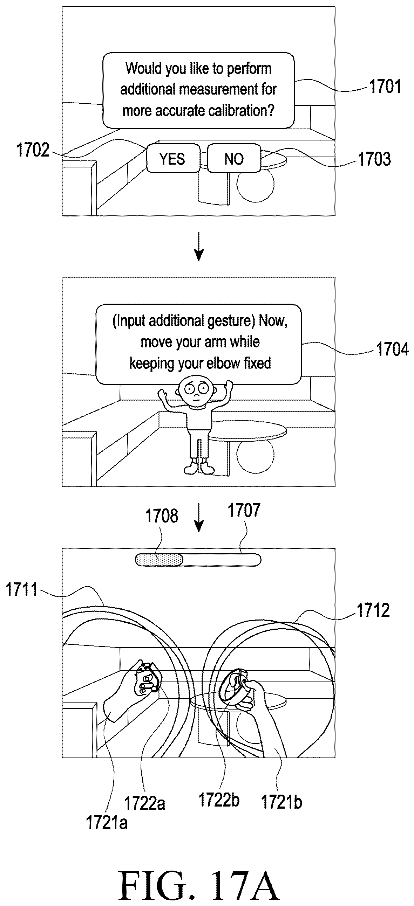

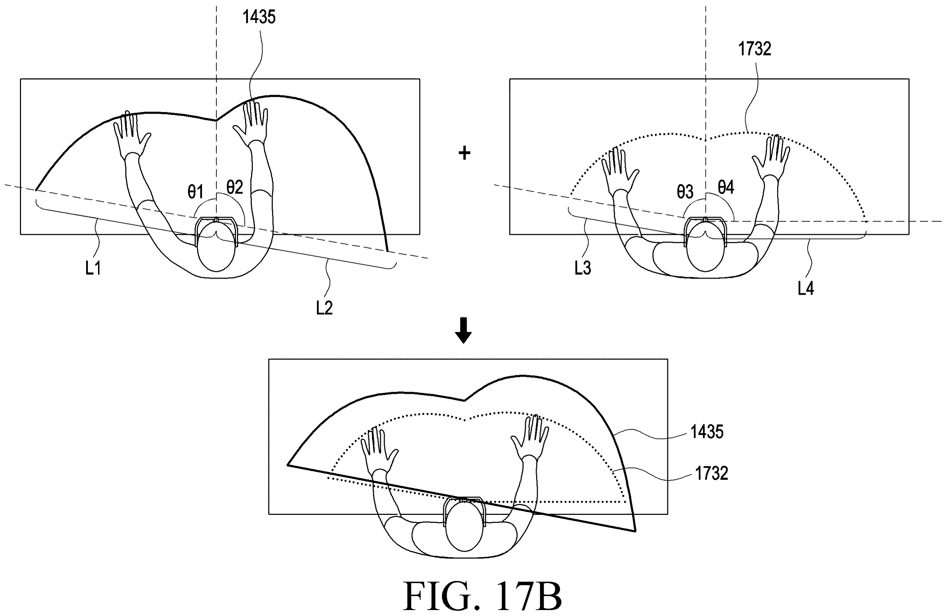

FIG. 16 is a flowchart illustrating an operation method of an electronic device according to an embodiment. The embodiment of FIG. 16 will be described with reference to FIGS. 17A and 17B. FIG. 17A is a diagram illustrating content according to an embodiment. FIG. 17B is a diagram illustrating depth information according to an embodiment.

Referring to FIG. 16, according to an embodiment, in operation 1601, the electronic device 101 may express content related to movement of at least part of a user's body according to a designated first rule. In operation 1603, the electronic device 101 may obtain first information related to a location of at least a part of a body while content is being expressed. In operation 1605, the electronic device 101 may identify first depth information for object expression corresponding to a user based on the first information. For example, as described with reference to FIG. 14A, the electronic device 101 may express content related to movement in accordance with a first rule of drawing a circle with an arm stretched. Accordingly, the area information 1435 in FIG. 14B or FIG. 17B may be identified as the first depth information. Meanwhile, as described above, the first depth information may also be expressed as arm length information rather than area information 1435.

In operation 1607, the electronic device 101 may express content related to the movement of at least a part of the user's body according to a designated second rule. In operation 1609, the electronic device 101 may obtain second information related to a location of at least a part of the body while content is being expressed. In operation 1611, the electronic device 101 may identify second depth information for object expression corresponding to the user based on the second information. For example, as illustrated in FIG. 17A, the electronic device 101 may express content 1701, 1702, and 1703. The content 1701 may include the text of "Would you like to perform an additional measurement for more accurate calibration?". Each of content 1702 and 1703 may be an icon corresponding to approval or rejection. If content 1702 corresponding to approval is designated, the electronic device 101 may express content 1704. The content 1704 may include text related to movement of at least a part of the body according to the designated second rule. For example, the text may be text for describing the second rule of fixing an elbow and moving an arm, but there is no limit to the expression method.

The electronic device 101 may express content 1708 corresponding to an indicator on content 1707 corresponding to a progress bar. The content 1708 corresponding to the indicator may be, for example, configured based on the ratio of tasks performed so far among the tasks for completing the second rule, but there is no limit thereto. The electronic device 101 may also express the movement trajectories 1711 and 1712 of the hands 1721a and 1721b. The electronic device 101 may identify the movement trajectory 1711 and 1712 based on a result of capturing the hands 1721a and 1721b and/or sensing information of external electronic devices 1722a and 1722b, but there is no limit to the identification method.

The electronic device 101 may identify area information 1732 as second depth information, as illustrated in FIG. 17B. For example, the electronic device 101 may identify the area information 1732 based on the movement trajectories 1711 and 1712 of the hands 1721a and 1721b (e.g., by performing smoothing on the connecting line), but there is no limit to the method of identifying the area information 1732. The area information 1732 may include, for example, an area of -θ3° to 0° based on the length of L3 and an area of 0° to +θ4° based on the length of L4. Meanwhile, the above-described expression of the area information in the two-dimensional angular coordinate system is merely an example, and the area information may be expressed in three dimensions, in which case, a component in the φ direction may be additionally included. Accordingly, the electronic device 101 may identify area information 1732 as second depth information. As described above, the electronic device 101 may identify the area information 1435 as first depth information and the area information 1732 as second depth information. For example, the electronic device 101 may differently manage an object corresponding to each of the depth information. For example, the electronic device 101 may use the first depth information to determine whether to adjust a location in the depth direction of an object (or an object with low usage frequency) placed relatively far from the user, and/or to adjust the location in the depth direction. For example, the electronic device 101 may use the second depth information to determine whether to adjust a location in the depth direction of an object (or an object with high usage frequency) placed relatively close to the user, and/or to adjust the location in the depth direction.

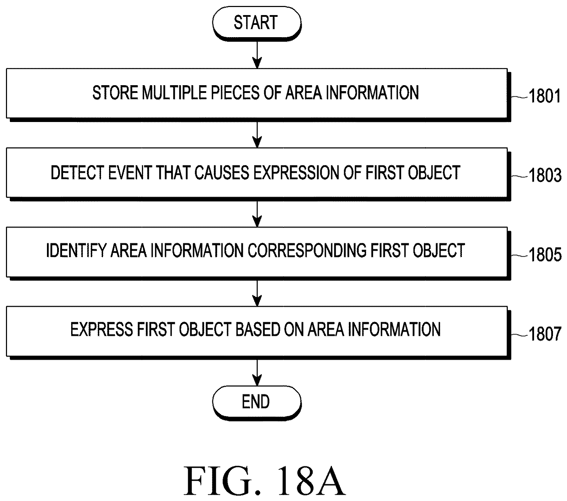

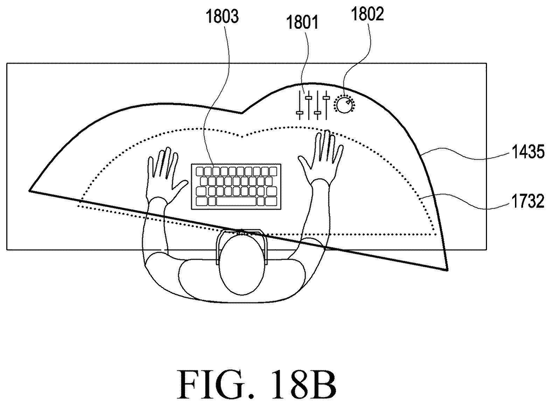

FIG. 18A is a flowchart illustrating an operation method of an electronic device according to an embodiment. The embodiment of FIG. 18A will be described with reference to FIG. 18B. FIG. 18B is a diagram illustrating an expression of an object according to an embodiment.

Referring to FIG. 18A, according to an embodiment, in operation 1801, the electronic device 101 may store multiple pieces of area information. For example, as illustrated in FIG. 17B, the electronic device 101 may identify and store the area information 1435 as first depth information and the area information 1732 as second depth information. In operation 1803, the electronic device 101 may detect an event that causes expression of a first object. In operation 1805, the electronic device 101 may identify area information corresponding to the first object. For example, the electronic device 101 may correspond to and manage area information to be used for each object. For example, the electronic device 101 may use area information corresponding to the first depth information to determine whether to adjust a location in the depth direction of an object (or an object with low usage frequency) placed relatively far from the user, and/or to adjust the location in the depth direction. For example, the electronic device 101 may use area information corresponding to the second depth information to determine whether to adjust a location in the depth direction of an object (or an object with high usage frequency) placed relatively close to the user, and/or to adjust the location in the depth direction. In operation 1807, the electronic device 101 may express the first object based on the area information.

For example, referring to FIG. 18B, the electronic device 101 may configure expression locations of objects 1801 and 1802 corresponding to the area information 1435, based on the area information 1435. For example, the electronic device 101 may configure the expression locations of the objects 1801 and 1802 (or objects with low usage frequency) placed relatively far from the user based on the area information 1435 and/or determine whether to adjust the expression locations. For example, the electronic device 101 may configure the expression location of the object 1803 (or an object with high usage frequency) placed relatively close to the user based on the area information 1732 and/or determine whether to adjust the expression location.

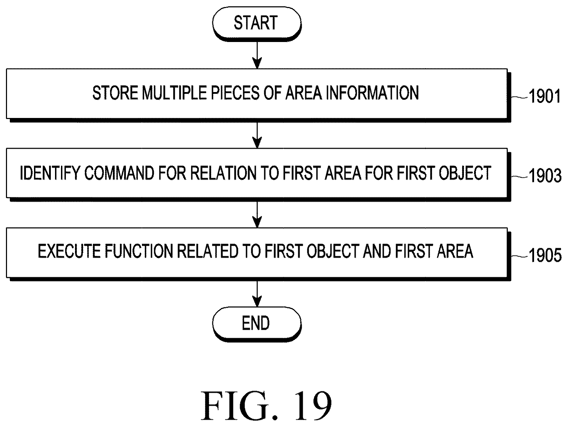

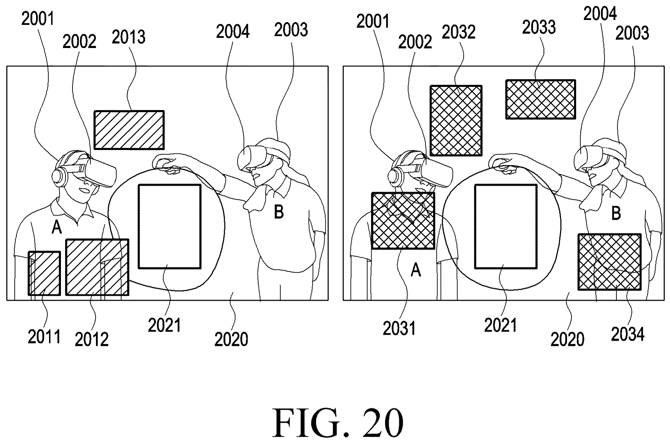

FIG. 19 is a flowchart illustrating an operation method of an electronic device according to an embodiment. The embodiment of FIG. 19 will be described with reference to FIG. 20. FIG. 20 is a diagram illustrating performance of related functions by multiple areas according to an embodiment.

Referring to FIG. 19, according to an embodiment, in operation 1901, the electronic device 101 may store multiple pieces of area information. For example, as illustrated in FIG. 20, the electronic device 101 may store first area information 2021 for content sharing and area information other than the first area information 2021. For example, as described above, the first area information 2021 may be configured based on at least one of the location of a part of the body, which have been identified while the electronic device 101 is providing content, and the location of a controller, but there is no limit to the configuration method. For example, the electronic device 101 may express text indicating that an area for content sharing with other users is to be configured, and may configure first area information 2021 for content sharing based on at least one location of a part of the body and/or a controller identified while the content is expressed, but there is no limit to the configuration method.

In operation 1903, the electronic device 101 may identify a command for relation to a first area for a first object. In operation 1905, the electronic device 101 may execute a function related to the first object and the first area. For example, referring to FIG. 20, a first electronic device 2002 worn by a first user 2001 may identify a user command for moving a shared object 2021 to the first area information 2021 for content sharing. The first electronic device 2002 may transmit data for causing the expression of the shared object 2021 to a second electronic device 2004 worn by a second user 2003, based on the location of the shared object 2021 being included in (or at least partially overlapping with) the first area information 2021. The second electronic device 2004 may express the shared object 2021 based on the received data. Meanwhile, the first electronic device 2002 may express objects 2011, 2012, and 2013 recognized by only the first user together with the shared object 2021. The second electronic device 2004 may express objects 2031, 2032, and 2033 recognized by only the second user together with the shared object 2021. Accordingly, only the shared object 2021 may be recognized by the two users 2001 and 2003.

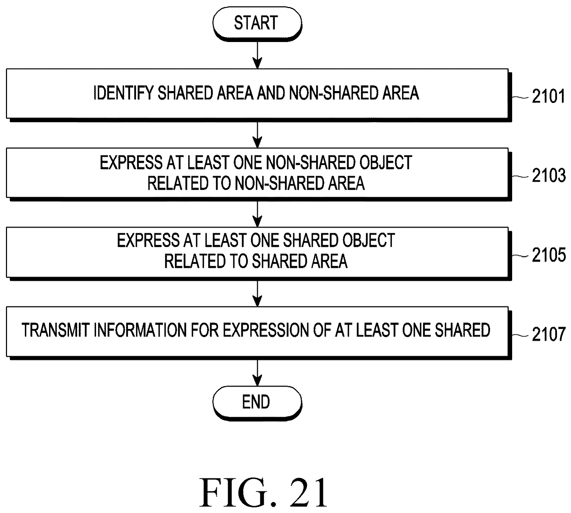

FIG. 21 is a flowchart illustrating an operation method of an electronic device according to an embodiment.

According to an embodiment, in operation 2101, the electronic device 101 may identify a shared area and a non-shared area. For example, as described above, the shared area may be configured based on at least one of the location of a part of the body, which have been identified while the electronic device 101 is providing content, and the location of a controller, but there is no limit to the configuration method. For example, the electronic device 101 may express text indicating that an area for content sharing with another user should be configured, and may configure a content sharing area based on at least one of the location of a part of the body, which have been identified while the content is expressed, and the location of a controller, but there is no limit to the configuration method. For example, as described above, the non-shared area may be configured based on at least one of the location of a part of the body, which have been identified while the electronic device 101 is providing content, and the location of a controller, but there is no limit to the configuration method. Alternatively, the electronic device 101 may configure an area other than the shared area as a non-shared area.

In operation 2103, the electronic device 101 may express at least one non-shared object related to the non-shared area. In operation 2105, the electronic device 101 may express at least one shared object related to the shared area. In operation 2107, the electronic device 101 may transmit information for expression of at least one shared object. The electronic device 101 may transmit information for expression of at least one shared object to an external electronic device. The external electronic device may express the shared object based on information for expression of at least one shared object. Accordingly, the shared object may be expressed by the electronic device 101 and an external electronic device. A non-shared object may be expressed by only the electronic device 101 and may not be expressed by an external electronic device.

According to an embodiment, the electronic device 101 may include at least one sensor 180. The electronic device 101 may include a GPS module 170. The electronic device 101 may include a display module 160. The electronic device 101 may include a processor 120 operatively connected to the at least one sensor 180, the GPS module 170, and the display module 160. The processor 120 may be configured to identify the current location of the electronic device 101 based on at least one piece of first data provided from the GPS module 170. The processor 120 may be configured to identify an intermediate destination for route guidance corresponding to destination information based on the destination information and the current location of the electronic device 101. The processor 120 may be configured to identify a direction in which the electronic device 101 is facing based on at least one piece of second data from the at least one sensor 180. The processor 120 may be configured to control the display module 160 to express an object corresponding to a range including a difference between a reference direction for route guidance from the current location of the electronic device 101 to the intermediate destination and the direction in which the electronic device 101 is facing.

According to an embodiment, the processor 120, as at least a part of the operation of controlling the display module 160 to express the object corresponding to a range including the difference, may be configured to control the display module 160 to express a route guidance object for route guidance from the current location to the intermediate destination together with the object corresponding to the range including the difference.

According to an embodiment, the processor 120, at a time point after controlling the display module 160 to express the object corresponding to a range including the difference, may be further configured to identify that another difference between another direction in which the electronic device 101 is facing at the time point and the reference direction is included in a range different from the range and control the display module 160 to express an object corresponding to a range different from the range instead of an object corresponding to the range, based on the fact that the other difference is included in the different range.

According to an embodiment, the processor 120, at a time point after controlling the display module 160 to express the object corresponding to a range including the difference, may be further configured to identify that another difference between another direction in which the electronic device 101 is facing at the time point and the reference direction is included in the range and control the display module 160 so as to maintain the expression of an object corresponding to the range, based on the fact that the other difference is included in the range.

According to an embodiment, the processor 120 may be configured to identify a plurality of ranges related to a difference between the reference direction and the direction in which the electronic device 101 is facing. The processor 120 may be configured to identify the range including the difference among the plurality of ranges.

According to an embodiment, the processor 120, as at least a part of the operation of identifying the plurality of ranges related to the difference between the reference direction and the direction in which the electronic device 101 is facing, may be configured to identify the plurality of ranges based on map information related to the current location and/or the intermediate destination.

According to an embodiment, the processor 120, as at least a part of the operation of identifying the plurality of ranges based on the map information, may be configured to identify the plurality of ranges corresponding to the presence of objects around the current location, the number of objects, and/or the size of objects included in the map information.

According to an embodiment, the processor 120, as at least a part of the operation of identifying the plurality of ranges related to the difference between the reference direction and the direction in which the electronic device 101 is facing, may be configured to identify the plurality of ranges based on at least some of the at least one piece of first data and the at least one piece of second data.

According to an embodiment, the processor 120, at a time point after controlling the display module 160 to express the object corresponding to the range including the difference, may be configured to identify a plurality of different ranges difference from the plurality of ranges and control the display module 160 to express an object corresponding to a range including the difference among the plurality of different ranges.

According to an embodiment, a shape, size, and/or property of an object corresponding to the range including the difference among the plurality of ranges may be at least partially different from a shape, size, and/or property of an object corresponding to the range including the difference among the plurality of different ranges.

According to an embodiment, an operation method of an electronic device 101 including at least one sensor 180, a GPS module 170, and a display module 160 may be provided. The operation method may include identifying the current location of the electronic device 101 based on at least one piece of first data provided from the GPS module 170. The operation method may include identifying an intermediate destination for route guidance corresponding to destination information based on the destination information and the current location of the electronic device 101. The operation method may include identifying a direction in which the electronic device 101 is facing based on at least one piece of second data from the at least one sensor 180. The operation method may include controlling the display module 160 to express an object corresponding to a range including a difference between a reference direction for route guidance from the current location of the electronic device 101 to the intermediate destination and the direction in which the electronic device 101 is facing.

According to an embodiment, controlling the display module 160 may control the display module 160 to express a route guidance object for route guidance from the current location to the intermediate destination together with the object corresponding to the range including the difference.

According to an embodiment, the operation method, at a time point after controlling the display module 160 to express the object corresponding to a range including the difference, may include identifying that another difference between another direction in which the electronic device 101 is facing at the time point and the reference direction is included in a range different from the range and controlling the display module 160 to express an object corresponding to a range different from the range instead of an object corresponding to the range, based on the fact that the other difference is included in the different range.

According to an embodiment, the operation method, at a time point after controlling the display module 160 to express the object corresponding to a range including the difference, may include identifying that another difference between another direction in which the electronic device 101 is facing at the time point and the reference direction is included in the range and controlling the display module 160 so as to maintain the expression of an object corresponding to the range, based on the fact that the other difference is included in the range.

According to an embodiment, the operation method may include identifying a plurality of ranges related to a difference between the reference direction and the direction in which the electronic device 101 is facing. The operation method may include identifying the range including the difference among the plurality of ranges.

According to an embodiment, identifying the plurality of ranges related to the difference between the reference direction and the direction in which the electronic device 101 is facing may identify the plurality of ranges based on map information related to the current location and/or the intermediate destination.

According to an embodiment, identifying the plurality of ranges based on the map information may identify the plurality of ranges corresponding to the presence of objects around the current location, the number of objects, and/or the size of objects included in the map information.

According to an embodiment, identifying the plurality of ranges related to the difference between the reference direction and the direction in which the electronic device 101 is facing may identify the plurality of ranges based on at least some of the at least one piece of first data and the at least one piece of second data.

According to an embodiment, the operation method, at a time point after controlling the display module 160 to express an object corresponding to the range including the difference, may include identifying a plurality of different ranges difference from the plurality of ranges and controlling the display module 160 to express the object corresponding to a range including the difference among the plurality of different ranges.

According to an embodiment, a shape, size, and/or property of an object corresponding to the range including the difference among the plurality of ranges may be at least partially different from a shape, size, and/or property of an object corresponding to the range including the difference among the plurality of different ranges.

According to an embodiment, a storage medium for storing at least one instruction readable by a computer may be provided. The at least one instruction, when executed by the processor 120 of the electronic device 101, may cause the electronic device 101 to perform at least one operation. The at least one operation may include expressing content related to movement of at least a part of a user's body according to a designated rule. The at least one operation may include obtaining information related to a location of at least a part of the user's body while the content is being expressed. The at least one operation may include identifying depth information for expression of an object corresponding to the user based on information related to a location of at least a part of the body. The at least one operation may include detecting an event that causes expression of a first object. The at least one operation may include expressing the first object based on the depth information corresponding to the user in response to detecting the event.

According to an embodiment, the content may include text for describing the designated rule and/or a video for the designated rule.

According to an embodiment, the at least one operation may include expressing a trajectory representing movement of the at least a part of the body, based on information related to a location of at least a part of the body.

According to an embodiment, the expressing the first object based on the depth information corresponding to the user may express that the first object is placed at the designated depth-direction location, based on the depth-direction location of the first object being less than or equal to the arm length included in the depth information.

According to an embodiment, the expressing the first object based on the depth information corresponding to the user may express that the first object is placed at an adjusted location different from the designated depth-direction location, based on the depth-direction location of the first object exceeding the arm length included in the depth information.

According to an embodiment, the expressing the first object based on the depth information corresponding to the user may express that the first object is placed within an area included in the depth information.

According to an embodiment, identifying depth information for expression of an object corresponding to the user based on information related to a location of at least a part of the body may identify the depth information, based on a trajectory of at least part of the body identified based on the information related to the location of at least part of the body.

According to an embodiment, identifying depth information for expression of an object corresponding to the user based on information related to a location of at least a part of the body may identify the depth information, based on a location of at least part of the body identified based on the information related to the location of at least part of the body.

According to an embodiment, the at least one operation may include expressing other content related to movement of at least a part of a user's body according to another designated rule. The at least one operation may include, while the other content is being expressed, obtaining other information related to a location of at least a part of the user's body. The at least one operation may include identifying other depth information for expression of an object corresponding to the user based on other information related to a location of at least a part of the body.

According to an embodiment, expressing the first object based on the depth information corresponding to the user in response to detecting the event may include identifying that the first object corresponds to the depth information among the depth information and the other depth information. The expressing the first object based on the depth information corresponding to the user may include an operation of expressing the first object based on the depth information corresponding to the user based on identifying that the first object corresponds to the depth information.

According to an embodiment, the electronic device 101 may include memory configured to store at least one instruction. The electronic device 101 may include at least one sensor 180. The electronic device 101 may include a display module 160. The electronic device 101 may include a processor 120 operatively connected to the memory, the at least one sensor 180, and the display module 160. The at least one instruction, when executed by the processor 120, may cause the electronic device 101 to perform at least one operation. The at least one operation may include expressing content related to movement of at least a part of a user's body according to a designated rule. The at least one operation may include obtaining information related to a location of at least a part of the user's body while the content is being expressed. The at least one operation may include identifying depth information for expression of an object corresponding to the user based on information related to a location of at least a part of the body. The at least one operation may include detecting an event that causes expression of a first object. The at least one operation may include expressing the first object based on the depth information corresponding to the user in response to detecting the event.

According to an embodiment, the content may include text for describing the designated rule and/or a video for the designated rule.

According to an embodiment, the at least one operation may include controlling the display module 160 to express a trajectory representing movement of the at least a part of the body, based on information related to a location of at least a part of the body.

According to an embodiment, controlling the display module 160 to express the first object based on the depth information corresponding to the user may control the display module 160 to express that the first object is placed at the designated depth-direction location, based on the depth-direction location of the first object being less than or equal to the arm length included in the depth information.

According to an embodiment, controlling the display module 160 to express the first object based on the depth information corresponding to the user may control the display module 160 to express that the first object is placed at an adjusted location different from the designated depth-direction location, based on the depth-direction location of the first object exceeding the arm length included in the depth information.

According to an embodiment, controlling the display module 160 to express the first object based on the depth information corresponding to the user may control the display module 160 to express that the first object is placed within an area included in the depth information.

According to an embodiment, identifying depth information for expression of an object corresponding to the user based on information related to a location of at least a part of the body may identify the depth information, based on a trajectory of at least part of the body identified based on the information related to the location of at least part of the body.

According to an embodiment, identifying depth information for expression of an object corresponding to the user based on information related to a location of at least a part of the body may identify the depth information, based on a location of at least part of the body identified based on the information related to the location of at least part of the body.

According to an embodiment, the at least one operation may include controlling the display module 160 to express other content related to movement of at least a part of a user's body according to another designated rule. The at least one operation may include, while the other content is being expressed, obtaining other information related to a location of at least a part of the user's body. The at least one operation may include identifying other depth information for expression of an object corresponding to the user based on other information related to a location of at least a part of the body.

According to an embodiment, controlling the display module 160 to express the first object based on the depth information corresponding to the user in response to detecting the event may include identifying that the first object corresponds to the depth information among the depth information and the other depth information. The controlling the display module 160 to express the first object based on the depth information corresponding to the user may include an operation of expressing the first object based on the depth information corresponding to the user based on identifying that the first object corresponds to the depth information.

According to an embodiment, an operation method of an electronic device 101 may be provided. The operation method of the electronic device 101 may include expressing content related to movement of at least a part of a user's body according to a designated rule. The operation method of the electronic device 101 may include obtaining information related to a location of at least a part of the user's body while the content is being expressed. The operation method of the electronic device 101 may include identifying depth information for expression of an object corresponding to the user based on information a location of at least a part of the body. The operation method of the electronic device 101 may include detecting an event that causes expression of a first object. The operation method of the electronic device 101 may include expressing the first object based on the depth information corresponding to the user in response to detecting the event.

The electronic device according to the embodiments of the disclosure may be various types of devices. The electronic device may include, for example, a wearable electronic device (e.g., a glass-type electronic device, an HMD device, a VST device, but not limited thereto), a portable communication device (e.g., a smartphone), a computer device, a portable multimedia device, a portable medical device, a camera, or a home appliance. The electronic device according to the embodiments of the disclosure is not limited to the above-described devices.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
at least one sensor (180);
a GPS module (170);
a display module (160); and
a processor (120) operatively connected to the at least one sensor (180), the GPS module (170), and the display module (160),
wherein the processor (120) is configured to:
based on at least one first data provided from the GPS module (170), identify a current location of the electronic device (101);
based on destination information and the current location of the electronic device (101), identify an intermediate destination for route guidance corresponding to the destination information;
based on at least one second data from the at least one sensor (180), identify a direction in which the electronic device (101) faces; and
control the display module (160) to represent an object corresponding to a range in which a difference between a reference direction for route guidance from the current location of the electronic device (101) to the intermediate destination and the direction in which the electronic device (101) faces is included.

2. The electronic device (101) of claim 1, wherein the processor (120) is configured to, as at least a part of the operation of controlling the display module (160) to represent the object corresponding to the range in which the difference is included, control the display module (160) to represent a route guidance object for route guidance from the current location to the intermediate destination, together with the object corresponding to the range in which the difference is included.

3. The electronic device (101) of one of claims 1 and 2, wherein the processor (120) is further configured to, at a time point after controlling the display module (160) to represent the object corresponding to the range in which the difference is included:
identify that another difference between another direction in which the electronic device (101) faces at the time point and the reference direction is included in a different range from the range; and
based on the other difference being included in the different range, control the display module (160) to represent an object corresponding to the different range instead of the object corresponding to the range,.

4. The electronic device (101) of one of claims 1 to 3, wherein the processor (120) is further configured to, at a time point after controlling the display module (160) to represent the object corresponding to the range in which the difference is included:
identify that another difference between another direction in which the electronic device (101) faces at the time point and the reference direction is included in the range; and
based on the other difference being included in the range, control the display module (160) to maintain the representation of the object corresponding to the range,.

5. The electronic device (101) of one of claims 1 to 4, wherein the processor (120) is further configured to:
identify a plurality of ranges associated with the difference between the reference direction and the direction in which the electronic device (101) faces; and
identify the range in which the difference is included among the plurality of ranges.

6. The electronic device (101) of one of claims 1 to 5, wherein the processor (120) is configured to, as at least a part of the operation of identifying the plurality of ranges associated with the difference between the reference direction and the direction in which the electronic device (101) faces, identify the plurality of ranges, based on map information associated with the current location and/or the intermediate destination.

7. The electronic device (101) of one of claims 1 to 6, wherein the processor (120) is configured to,, as at least a part of the operation of identifying the plurality of ranges, based on the map information, identify the plurality of ranges corresponding to presence or absence of objects around the current location, included in the map information, a number of the objects, and/or sizes of the objects.

8. The electronic device (101) of one of claims 1 to 7, wherein the processor (120) is configured to, as at least a part of the operation of identifying the plurality of ranges associated with the difference between the reference direction and the direction in which the electronic device (101) faces, identify the plurality of ranges, based on at least a part of the at least one first data and the at least one second data.

9. The electronic device (101) of one of claims 1 to 8, wherein the processor (120) is further configured to, at a time point after controlling the display module (160) to represent the object corresponding to the range in which the difference is included:
identify a plurality of different ranges from the plurality of ranges; and
control the display module (160) to represent the object corresponding to the range in which the difference is included among the plurality of different ranges.

10. The electronic device (101) of one of claims 1 to 9, wherein a shape, size, and/or property of the object corresponding to the range in which the difference is included among the plurality of ranges is at least partially different from a shape, size, and/or property of the object corresponding to the range in which the difference is included among the plurality of different ranges.

11. A method of operating an electronic device (101) comprising at least one sensor (180), a GPS module (170), and a display module (160), the method comprising:
based on at least one first data provided from the GPS module (170), identifying a current location of the electronic device (101);
based on destination information and the current location of the electronic device (101), identifying an intermediate destination for route guidance corresponding to the destination information;
based on at least one second data from the at least one sensor (180), identifying a direction in which the electronic device (101) faces; and
controlling the display module (160) to represent an object corresponding to a range in which a difference between a reference direction for route guidance from the current location of the electronic device (101) to the intermediate destination and the direction in which the electronic device (101) faces is included.

12. The method of claim 11, wherein the controlling of the display module (160) to represent the object corresponding to the range in which the difference is included comprises controlling the display module (160) to represent a route guidance object for route guidance from the current location to the intermediate destination, together with the object corresponding to the range in which the difference is included.

13. The method of one of claims 11 to 12, further comprising, at a time point after controlling the display module (160) to represent the object corresponding to the range in which the difference is included:
identifying that another difference between another direction in which the electronic device (101) faces at the time point and the reference direction is included in a different range from the range; and
based on the other difference being included in the different range, controlling the display module (160) to represent an object corresponding to the different range instead of the object corresponding to the range,.

14. The method of one of claims 11 to 13, further comprising, at a time point after controlling the display module (160) to represent the object corresponding to the range in which the difference is included:
identifying that another difference between another direction in which the electronic device (101) faces at the time point and the reference direction is included in the range; and
based on the other difference being included in the range, controlling the display module (160) to maintain the representation of the object corresponding to the range,.

15. The method of one of claims 11 to 14, further comprising:
identifying a plurality of ranges associated with the difference between the reference direction and the direction in which the electronic device (101) faces; and
identifying the range in which the difference is included among the plurality of ranges.
